# EUROPÄISCHE PATENTSCHRIFT

(11) **EP 2 767 451 B1**
(45) Veröffentlichungstag und Bekanntmachung des Hinweises auf die Patenterteilung: **12.06.2019**
(21) Anmeldenummer: 14154646.5
(22) Anmeldetag: 11.02.2014
(51) Int. Cl.: B61L 27/00, B61L 15/00

(54) **Verfahren und Netzwerk zur Datenkommunikation**
Method and network for data communication
Procédé et réseau de communication de données

(30) Priorität: 15.02.2013 AT 501092013
(43) Veröffentlichungstag der Anmeldung: 20.08.2014
(73) Patentinhaber: Frequentis AG, 1100 Wien (AT)
(72) Erfinder: Widner, Herbert, 1160 Wien (AT)
(74) Vertreter: Wildhack & Jellinek

(56) Entgegenhaltungen:
- EP-A1- 1 060 972
- DE-A1-102004 005 420
- "EUROPEAN INTEGRATED RAILWAY RADIO ENHANCED NETWORK System Requirements Specification Version 15.3.0", , 8. März 2012 (2012-03-08), XP055255810, Gefunden im Internet: URL:http://www.uic.org/IMG/pdf/p0028d004.3 -15.3.0.pdf [gefunden am 2016-03-07]
- HILLENBRAND W: "GSM-R The railways Integrated Mobile Communication system", GSM-R DESCRIPTION, SIEMENS, Nr. V 1.2, 4. Mai 1999 (1999-05-04), Seiten 1-50, XP002593700,
- MICHAEL LIEM AND VEENA B MENDIRATTA: "Mission critical communication networks for railways", BELL LABS TECHNICAL JOURNAL, WILEY, CA, US, Bd. 16, Nr. 3, 1. Dezember 2011 (2011-12-01), Seiten 29-46, XP001570291, ISSN: 1089-7089, DOI: 10.1002/BLTJ.20520 [gefunden am 2011-11-22]

## Beschreibung

Die Erfindung betrifft ein Netzwerk zur Datenkommunikation und zum Datenaustausch gemäß dem Oberbegriff des Patentanspruchs 1. Weiters betrifft die Erfindung ein Verfahren zur Datenkommunikation und zum Datenaustausch gemäß dem Oberbegriff des Patentanspruchs 10. Ferner betrifft die Erfindung Datenträger, auf denen ein Programm zur Durchführung eines erfindungsgemäßen Verfahrens auf einem mobilen Endgerät, einer Kommunikationszentrale oder einem Verteilungsrechner abgespeichert ist.

Aus dem Stand der Technik ist eine Vielzahl von Datenkommunikationsnetzwerken und Datenkommunikationsverfahren zwischen Kontrollzentralen und schienengebundenen Fahrzeugen bekannt. In letzter Zeit wurden im Zusammenhang mit dem GSM-R-Standard einige schienenverkehrsbezogene spezielle Kommunikationsverfahren eingeführt, die jedoch eine sehr aufwendige und teure Infrastruktur benötigen.

Ziel der vorliegenden Erfindung ist es, die Funktionalität solcher Datenkommunikationsnetzwerke, die speziell auf den Schienenverkehr abgestimmt sind, auch dort nutzbar zu machen, wo eine besonders ausgebildete Infrastruktur nicht zur Verfügung steht. Insbesondere ist es Aufgabe der Erfindung, einen Notruf, einen Gruppenruf, einen Anruf an den zuständigen Fahrdienstleiter sowie eine Registrierung bestimmter Züge und einen Anruf dieses Zugs unter seiner Zugnummer zu ermöglichen.

Die Erfindung löst die vorstehend genannte Aufgabe bei einem Netzwerk der eingangs genannten Art mit dem kennzeichnenden Merkmal des Patentanspruchs 1.

Die Erfindung betrifft somit ein Netzwerk zur Datenkommunikation und zum Datenaustausch zwischen Kommunikationseinheiten,
a) umfassend ein Basisnetzwerk sowie eine Anzahl von an das Basisnetzwerk angeschlossenen Kommunikationseinheiten, nämlich
   - zumindest eine Kontrollzentrale und
   - zumindest ein in einem an Schienen gebundenen Fahrzeug befindliches und/oder angeordnetes mobiles Endgerät
b) wobei das Basisnetzwerk an eine Anzahl von entlang der Schienenstrecke befindlichen Sendestationen angeschlossen ist,
c) vom Basisnetzwerk zu den in den Fahrzeugen befindlichen mobilen Endgeräten über die Sendestationen, insbesondere ausschließlich, zwei Arten von Kommunikationskanälen über Funk zur Verfügung stehen, nämlich
   - ein Sprachkanal zur Übertragung von Sprache und
   - ein Datenkanal zur digitalen Datenübertragung, und
d) wobei das Basisnetzwerk jeweils auf Anfrage einer Kommunikationseinheit einen oder mehrere Kommunikationskanäle zur Datenübertragung zwischen, insbesondere ausschließlich, zwei Kommunikationseinheiten erstellt.

Erfindungsgemäß ist vorgesehen, dass
e) an das Basisnetzwerk als weitere Kommunikationseinheit ein zentraler Verteilungsrechner zum Aufbau, zur Beendigung und zur Verwaltung eines oder mehrerer Kommunikationskanäle zur Daten- und/oder Sprachkommunikation über das Basisnetzwerk zwischen dem Verteilungsrechner und den Kommunikationseinheiten angeschlossen ist,
f) der Verteilungsrechner bei Einlangen einer Anfrage einer Kommunikationseinheit über einen Datenkanal aktivierbar ist und eine Sprachkommunikation über jeweils einen Sprachkanal sowohl zur anfragenden Kommunikationseinheit als auch einer oder mehreren durch die jeweilige Anfrage angegebenen oder bestimmbaren Kommunikationseinheiten erstellt und aufrecht erhält, und
g) der Verteilungsrechner während des Bestehens der derart aufgebauten Sprachkanäle bei ihm einlangende Sprachmitteilungen an die übrigen der durch die jeweilige Anfrage angegebenen oder bestimmten Kommunikationseinheiten weiterleitet, wobei
   - das Basisnetzwerk ein TETRA- oder LTE-Netzwerk ist oder ein GSM- aber nicht GSM-R-Netzwerk ist, wobei der Aufbau von Datenkanälen über eine Signalisierung mittels Kurzmitteilungen, insbesondere SMS oder SDS, erfolgt, oder
   - das Basisnetzwerk ein analoges Funknetzwerk ist, wobei zur Übertragung der Daten zwischen dem Basisnetzwerk und den mobilen Endgeräten jeweils ein Modem vorgesehen ist, das zu Übertragende Daten in ein den Sprachdaten überlagertes Analogsignal codiert und in den Sprachdaten vorliegende überlagerte codierte Daten decodiert und diese Daten in digitaler Form zur Verfügung hält.

Durch dieses vorteilhafte Vorgehen wird eine an den Schienenverkehr angepasste Datenkommunikation ermöglicht, wobei lediglich eine sehr einfache Kommunikationsinfrastruktur zur Verfügung stehen braucht.

Um ein konkretes mobiles Endgerät in einem schienengebundenen Fahrzeug mit einer bestimmten, diesem Fahrzeug zugeordneten Nummer zu erreichen, kann vorgesehen sein, dass
a) eine Kommunikationseinheit, insbesondere jedes mobile Endgerät, die Anmeldung beim Verteilungsrechner ermöglicht, indem das mobile Endgerät seinen jeweiligen Benutzer zur Eingabe einer Kennung, insbesondere einer Zugnummer, auffordert und diese Kennung gemeinsam mit oder als Teil einer Registrierungsanfrage an den Verteilungsrechner übermittelt,
b) der Verteilungsrechner bei Einlangen einer solchen Registrierungsanfrage die angegebene und übermittelte Kennung der internen Netzwerkkennung, insbesondere Einwahlnummer oder Telefonnummer, des sich anmeldenden mobilen Endgeräts zuordnet und in einem Registrierungsspeicher abspeichert, und
c) der Verteilungsrechner bei Anfrage einer Sprachkommunikation unter Angabe der jeweiligen Kennung durch einen anderen der Kommunikationseinheiten einen Sprachkanal zum mobilen Endgerät mit der der Kennung zugeordneten internen Netzwerkkennung aufbaut und jeweils Sprachmitteilungen von dem angemeldeten mobilen Endgerät und der anfragenden anderen Kommunikationseinheit weiterleitet.

Eine bei der Schienenverkehrskommunikation wünschenswerte und häufig benötigte Kommunikationsverbindung ist die Verbindung eines Schienenfahrzeugs zum jeweils zuständigen Fahrdienstleiter bzw. zur jeweils zuständigen Kontrollzentrale. Zur Verbindung eines mobilen Endgeräts mit der jeweils zuständigen Kontrollzentrale kann vorgesehen sein, dass
a) eine Anzahl von Kontrollzentralen vorgesehen sind, die jeweils für die Regelung von bestimmten geographischen Abschnitten zuständig sind, wobei der Verteilungsrechner eine Zuordnung von geographischen Positionen zu den einzelnen Kontrollzentralen enthält, und in einem Zuordnungsspeicher zur Verfügung hält,
b) zumindest ein mobiles Endgerät eine Einrichtung zur Detektion seiner geographischen Position, insbesondere ein GPS-Gerät, aufweist,
c) das jeweilige mobile Endgerät auf Anwahl seines Benutzers eine LDA-Anfrage unter Angabe seiner geographischen Position an den Verteilungsrechner übermittelt,
d) der Verteilungsrechner bei Einlangen einer solchen LDA-Anfrage einen Sprachkanal zum anfragenden mobilen Endgerät sowie zur jeweiligen der angegebenen geographischen Position zugeordneten Kontrollzentrale erstellt, und
e) der Verteilungsrechner Sprachmitteilungen zwischen dem anfragenden mobilen Endgerät und der ermittelten Kontrollzentrale weiterleitet.

Zur Ermöglichung eines Gruppenrufs kann vorgesehen sein,
a) dass der Verteilungsrechner einen Gruppenspeicher für Gesprächsgruppen aufweist, wobei jeder Gesprächsgruppe jeweils eine Gruppenkennung sowie die der jeweiligen Gesprächsgruppe zugeordneten Kommunikationseinheiten zugeordnet sind,
b) dass eine Kommunikationseinheit bei Aktivierung unter Angabe einer Gruppenkennung durch ihren jeweiligen Benutzer eine Gruppenrufanfrage an den Verteilungsrechner mit der jeweiligen Gruppenkennung übermittelt,
c) dass der Verteilungsrechner bei Vorliegen einer Gruppenrufanfrage mit einer angegebenen Gruppenkennung jeweils einen Sprachkanal zu sämtlichen der Gruppe zugehörigen Kommunikationseinheiten aufbaut, und
d) dass der Verteilungsrechner nach Aufbau der Sprachkanäle Sprachmitteilungen zwischen den der jeweiligen Gruppe zugeordneten Kommunikationseinheiten und gegebenenfalls der anfragenden Kommunikationseinheit weiterleitet,
e) wobei insbesondere der Verteilungsrechner einen Sprachkanal nur dann aufbaut, wenn die anfragende Kommunikationseinheit der jeweiligen Gruppe zugeordnet ist.

Zur Ermöglichung eines priorisierten Notrufs kann vorgesehen sein,
a) dass der Verteilungsrechner einen Notrufgruppenspeicher aufweist, wobei der Notruf-Gruppe jeweils eine Gruppenkennung sowie die der Notruf-Gruppe zugeordneten Kommunikationseinheiten zugeordnet sind,
b) dass eine Kommunikationseinheit bei Aktivierung unter Angabe einer Notruf-Kennung durch ihren jeweiligen Benutzer einen Notruf an den Verteilungsrechner übermittelt,
c) dass der Verteilungsrechner bei Vorliegen eines Notrufs eine Sprachkommunikation zu sämtlichen der Notruf-Gruppe zugehörigen Kommunikationseinheiten aufbaut,
d) dass der Verteilungsrechner nach Aufbau der Sprachkommunikation Sprachmitteilungen zwischen den der Notruf-Gruppe zugeordneten Kommunikationseinheiten und der den Notruf absendenden Kommunikationseinheit weiterleitet, und
e) dass der Verteilungsrechner vor dem Aufbau der Sprachkanäle mit Kommunikationseinheiten aus der Notrufgruppe bestehende Sprachkanäle zu diesen Kommunikationseinheiten unterbricht und/oder beendet und gegebenenfalls nach dem Ende die durch den Notruf beendeten und/oder unterbrochenen Sprachkanäle fortsetzt und/oder erneut herstellt.

Das erfindungsgemäße Netzwerk kommt mit einer sehr einfachen zugrundeliegenden Infrastruktur aus, wobei lediglich ganz geringe Mindestanforderungen vorliegen brauchen. Insbesondere reicht es aus, wenn die Kommunikationseinheiten unmittelbar ausschließlich mit dem Verteilungsrechner in Daten- und/oder Sprachkommunikation stehen und/oder dass Sprach- und/oder Datenkanäle ausschließlich zwischen dem Verteilungsrechner und einer Kommunikationseinheit aufgebaut werden.

Um ein einfaches Beenden einer Sprachkommunikation zu erreichen, kann vorgesehen sein, dass
a) die Kommunikationseinheiten dem jeweiligen Benutzer die Option zum Beenden einer Sprachverbindung bieten,
b) dass die Kommunikationseinheiten bei Anwahl dieser Option durch den Benutzer eine Beendigungsmitteilung über einen Datenkanal an den Verteilungsrechner übermitteln, der die Sprachverbindung zwischen der Kommunikationseinheit und dem Verteilungsrechner trennt.

Um Gruppenrufe oder Notrufe zu beenden bzw. um als einzelner Kommunikationsteilnehmer aus einem Gruppenruf oder Notruf vorzeitig auszusteigen, kann vorgesehen sein, dass der Verteilungsrechner für den Fall, dass eine Weiterleitung von Sprachmitteilungen innerhalb einer Gruppe oder Notruf-Gruppe von Kommunikationseinheiten besteht und sich nach der Trennung der Sprachverbindung lediglich eine einzige Kommunikationseinheit in der jeweiligen Gesprächsgruppe oder Notrufgruppe befindet oder die jeweilige Gesprächsgruppe oder Notrufgruppe nach Ausscheiden der jeweiligen Kommunikationseinheit eine einen vorgegebenen Schwellenwert unterschreitende Anzahl von Teilnehmern aufweist, die Verbindung zu sämtlichen der Gesprächsgruppe oder Notrufgruppe zugehörigen Kommunikationseinheiten trennt.

Weiters reicht es zur Bereitstellung der vorstehend genannten Funktionalität aus, wenn Sprachkanäle ausschließlich vom Verteilungsrechner initiiert sind.

Die Erfindung löst die eingangs genannte Aufgabe bei einem Verfahren der eingangs genannten Art mit den kennzeichnenden Merkmalen des Patentanspruchs 10.

Um ein konkretes mobiles Endgerät in einem schienengebundenen Fahrzeug mit einer bestimmten, diesem Fahrzeug zugeordneten Nummer zu erreichen, kann vorgesehen sein, dass
a) eine Kommunikationseinheit, insbesondere jedes mobile Endgerät, beim Verteilungsrechner angemeldet wird, indem das mobile Endgerät seinen jeweiligen Benutzer zur Eingabe einer Kennung, insbesondere einer Zugnummer, auffordert und diese Kennung gemeinsam mit oder als Teil einer Registrierungsanfrage an den Verteilungsrechner übermittelt,
b) bei Einlangen einer solchen Registrierungsanfrage mit dem Verteilungsrechner die angegebene und übermittelte Kennung der internen Netzwerkkennung, insbesondere Einwahlnummer oder Telefonnummer, des sich anmeldenden mobilen Endgeräts zugeordnet und in einem Registrierungsspeicher abgespeichert wird, und
c) falls eine Anfrage betreffend eine Sprachkommunikation unter Angabe der jeweiligen Kennung durch einen anderen der Kommunikationseinheiten beim Verteilungsrechner einlangt, eine Sprachkommunikation vom Verteilungsrechner zum mobilen Endgerät mit der der Kennung zugeordneten internen Netzwerkkennung aufgebaut wird und jeweils Sprachmitteilungen von dem angemeldeten mobilen Endgerät und der anfragenden anderen Kommunikationseinheit weitergeleitet werden.

Zur Verbindung eines mobilen Endgeräts mit der jeweils zuständigen Kontrollzentrale kann vorgesehen sein, dass
a) eine Anzahl von Kontrollzentralen vorgesehen sind, die jeweils für die Regelung von bestimmten geographischen Abschnitten zuständig sind, wobei dem Verteilungsrechner eine Zuordnung von geographischen Positionen zu den einzelnen Kontrollzentralen vorgegeben wird, und von diesem in einem Zuordnungsspeicher zur Verfügung gehalten wird,
b) zumindest ein mobiles Endgerät laufend, insbesondere mittels eines eingebauten GPS-Geräts, seine Position ermittelt,
c) mit dem jeweiligen mobile Endgerät eine LDA-Anfrage unter Angabe seiner geographischen Position an den Verteilungsrechner übermittelt wird,
d) bei Einlangen einer LDA-Anfrage beim Verteilungsrechner eine Sprachkommunikation zwischen dem Verteilungsrechner und dem anfragenden mobilen Endgerät sowie zwischen dem Verteilungsrechner und der jeweiligen der angegebenen geographischen Position zugeordneten Kontrollzentrale erstellt wird, und
e) Sprachmitteilungen zwischen dem anfragenden mobilen Endgerät und der ermittelten Kontrollzentrale weitergeleitet werden.

Zur Ermöglichung eines Gruppenrufs kann vorgesehen sein, dass
a) im Verteilungsrechner ein Gruppenspeicher für Gesprächsgruppen alloziert wird, wobei jeder Gesprächsgruppe jeweils eine Gruppenkennung sowie die der jeweiligen Gruppe zugeordneten Kommunikationseinheiten zugeordnet werden,
b) dass mit einer Kommunikationseinheit bei Aktivierung unter Angabe einer Gruppenkennung durch ihren jeweiligen Benutzer eine Gruppenrufanfrage an den Verteilungsrechner mit der jeweiligen Gruppenkennung übermittelt wird,
c) dass mit dem Verteilungsrechner bei Vorliegen einer Gruppenrufanfrage mit einer angegebenen Gruppenkennung eine Sprachkommunikation zu sämtlichen der Gruppe zugehörigen Kommunikationseinheiten aufgebaut werden, und
d) dass mit dem Verteilungsrechner nach Aufbau der Sprachkanäle Sprachmitteilungen zwischen den der jeweiligen Gruppe zugeordneten Kommunikationseinheiten und gegebenenfalls der anfragenden Kommunikationseinheit weitergeleitet werden,
e) wobei insbesondere ein Sprachkanal nur dann aufgebaut wird, wenn die anfragende Kommunikationseinheit der jeweiligen Gruppe zugeordnet ist.

Zur Ermöglichung eines priorisierten Notrufs kann vorgesehen sein,
a) dass im Verteilungsrechner einen Notrufgruppenspeicher alloziert wird, wobei der Notruf-Gruppe jeweils eine Gruppenkennung sowie die der Notruf-Gruppe zugeordneten Kommunikationseinheiten zugeordnet werden,
b) dass mit einer Kommunikationseinheit bei Aktivierung unter Angabe einer Notruf-Kennung durch ihren jeweiligen Benutzer einen Notruf an den Verteilungsrechner übermittelt werden,
c) dass mit dem Verteilungsrechner bei Vorliegen eines Notrufs Sprachkanäle zu sämtlichen der Notruf-Gruppe zugehörigen Kommunikationseinheiten aufgebaut werden,
d) dass mit dem Verteilungsrechner nach Aufbau der Sprachkanäle Sprachmitteilungen zwischen den der Notruf-Gruppe zugeordneten Kommunikationseinheiten und der den Notruf absendenden Kommunikationseinheit weitergeleitet werden, und
e) dass vom Verteilungsrechner vor dem Aufbau der Sprachkanäle mit Kommunikationseinheiten aus der Notrufgruppe bestehende Sprachkanäle zu diesen Kommunikationseinheiten unterbrochen und/oder beendet werden und insbesondere nach dem Abbau der durch den Notruf erstellten Sprachkanäle fortsetzt und/oder erneut hergestellt werden.

Das erfindungsgemäße Netzwerk kommt mit einer sehr einfachen zugrundeliegenden Infrastruktur aus, wobei lediglich ganz geringe Mindestanforderungen vorliegen brauchen. Insbesondere reicht es aus, wenn die Kommunikationseinheiten unmittelbar ausschließlich mit dem Verteilungsrechner in Daten- und/oder Sprachkommunikation gebracht werden und/oder wenn Sprach- und/oder Datenkanäle ausschließlich zwischen dem Verteilungsrechner und einer Kommunikationseinheit aufgebaut werden.

Um ein einfaches Beenden einer Sprachkommunikation zu erreichen, kann vorgesehen sein, dass
a) dem jeweiligen Benutzer von den Kommunikationseinheiten die Option zum Beenden einer Sprachverbindung geboten wird,
b) dass von den Kommunikationseinheiten bei Anwahl dieser Option durch den Benutzer eine Beendigungsmitteilung über einen Datenkanal an den Verteilungsrechner übermittelt wird, und
c) dass bei Einlangen einer Beendigungsmitteilung beim Verteilungsrechner die Sprachkanäle zwischen der Kommunikationseinheit und dem Verteilungsrechner getrennt werden.

Um Gruppenrufe oder Notrufe zu beenden bzw. um als einzelner Kommunikationsteilnehmer aus einem Gruppenruf oder Notruf vorzeitig auszusteigen, kann vorgesehen sein, dass vom für den Fall, dass eine Weiterleitung von Sprachmitteilungen innerhalb einer Gruppe oder Notruf-Gruppe von Kommunikationseinheiten besteht und sich nach der Trennung der Sprachverbindung lediglich eine einzige Kommunikationseinheit in der jeweiligen Gesprächsgruppe oder Notruf-Gruppe befindet oder die jeweilige Gesprächsgruppe oder Notruf-Gruppe nach Ausscheiden der jeweiligen Kommunikationseinheit eine einen vorgegebenen Schwellenwert unterschreitende Anzahl von Teilnehmern aufweist, die Verbindung zu sämtlichen der Gesprächsgruppe oder Notruf-Gruppe zugehörigen Kommunikationseinheiten getrennt wird.

Weiters reicht es zur Bereitstellung der vorstehend genannten Funktionalität aus, wenn Sprachkanäle ausschließlich vom Verteilungsrechner initiiert werden.

Mehrere bevorzugte Ausführungsformen der Erfindung sind in den folgenden Zeichnungsfiguren näher dargestellt.

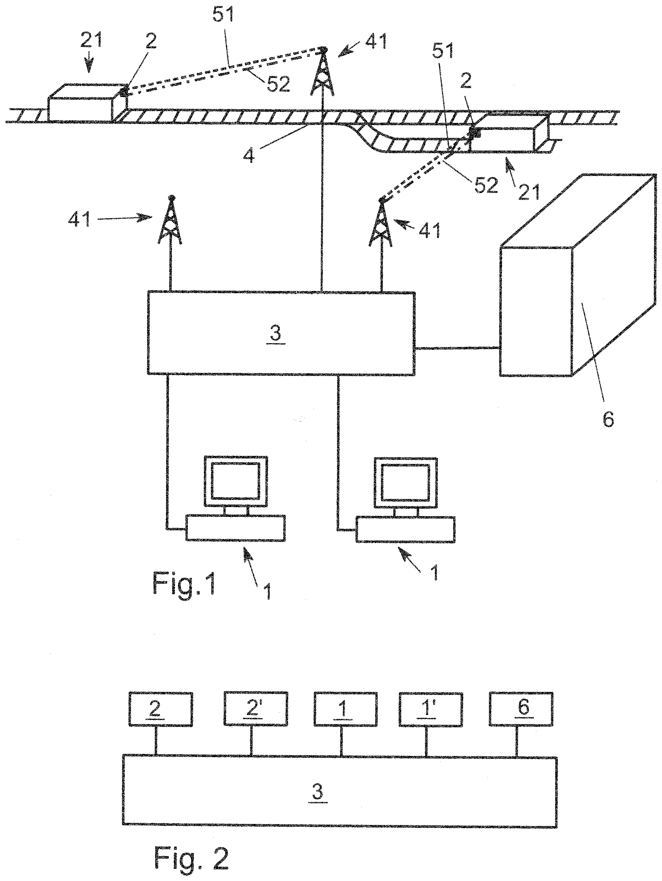

**Fig. 1** zeigt schematisch einen Schienabschnitt und zwei Schienenfahrzeuge, die mit einer ersten Ausführungsform eines erfindungsgemäßen Netzwerks in Datenverbindung stehen.
**Fig. 2** zeigt ein Blockschaltbild eines erfindungsgemäßen Netzwerks.

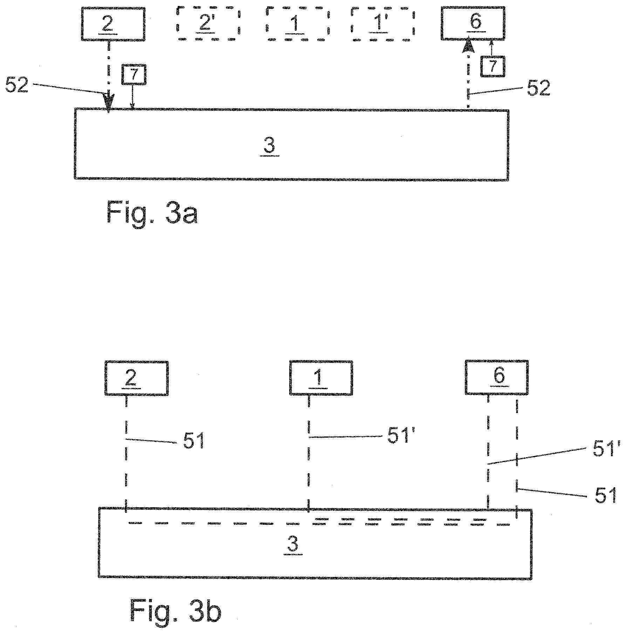

**Fig. 3a** zeigt eine erste bevorzugte Ausführungsform der Erfindung, wobei ein mobiles Endgerät eine Gesprächsanfrage an einen Verteilungsrechner übermittelt. **Fig. 3b** zeigt eine zwischen einem mobilen Endgerät und einer Kontrollzentrale mittels des Verteilungsrechners aufgebaute Gesprächsverbindung.

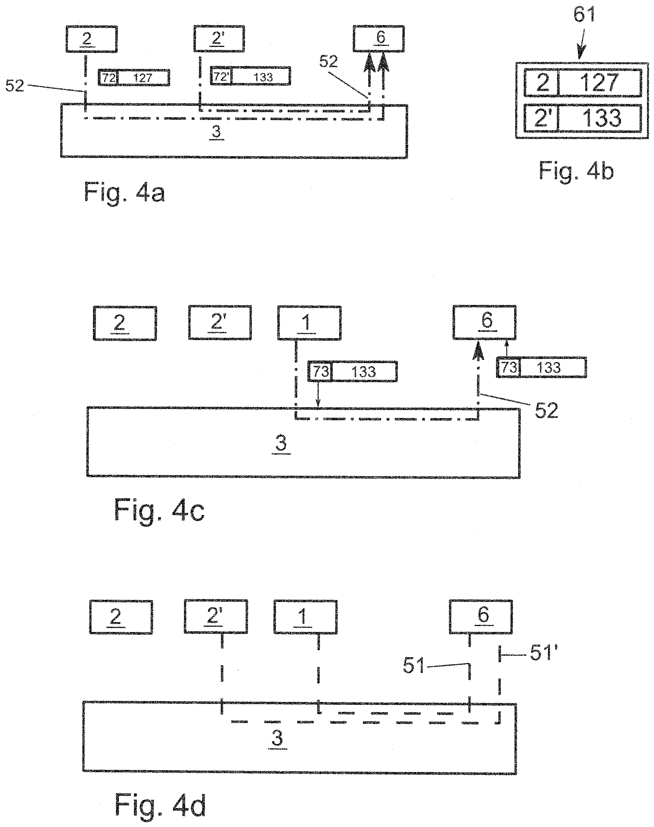

In **Fig. 4** ist eine Anmeldung zweier mobiler Endgeräte bei einem Verteilungsrechner dargestellt. **Fig. 4b** zeigt die Zuordnung von Kennungen zu mobilen Endgeräten. **Fig. 4c** zeigt eine Gesprächsanfrage einer Kontrollzentrale an einen Verteilungsrechner zum Aufbau einer Verbindung mit einem mobilen Endgerät. **Fig. 4d** zeigt die erstellte Gesprächsverbindung.

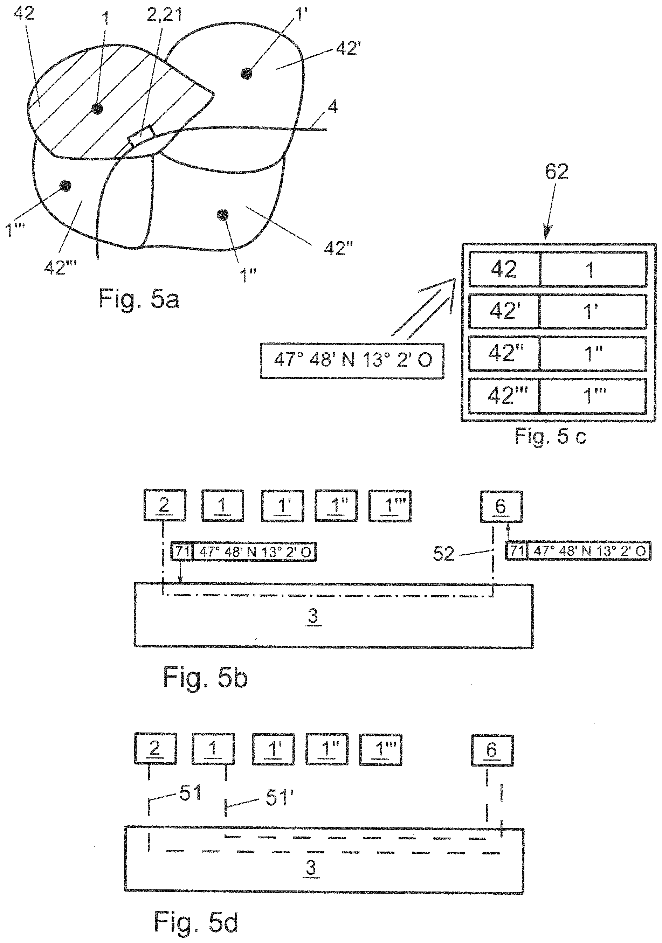

**Fig. 5a** zeigt einen Landkartenabschnitt mit einem Schienenabschnitt, auf dem sich ein Schienenfahrzeug bewegt, sowie eine Einteilung dieses Kartenabschnitts in eine Anzahl von von unterschiedlichen Kontrollzentralen kontrollierten geographischen Abschnitten.
**Fig. 5b** zeigt eine LDA-Anfrage eines mobilen Endgeräts an den Verteilungsrechner zur Herstellung einer Sprachverbindung mit der jeweils zuständigen Kontrollzentrale unter Angabe von geographischen Koordinaten. **Fig. 5c** zeigt eine Zuordnung einzelner geographischer Gebiete zu Kontrollzentralen. **Fig. 5d** zeigt die aufgrund der Anfrage erstellte Kommunikationssituation.

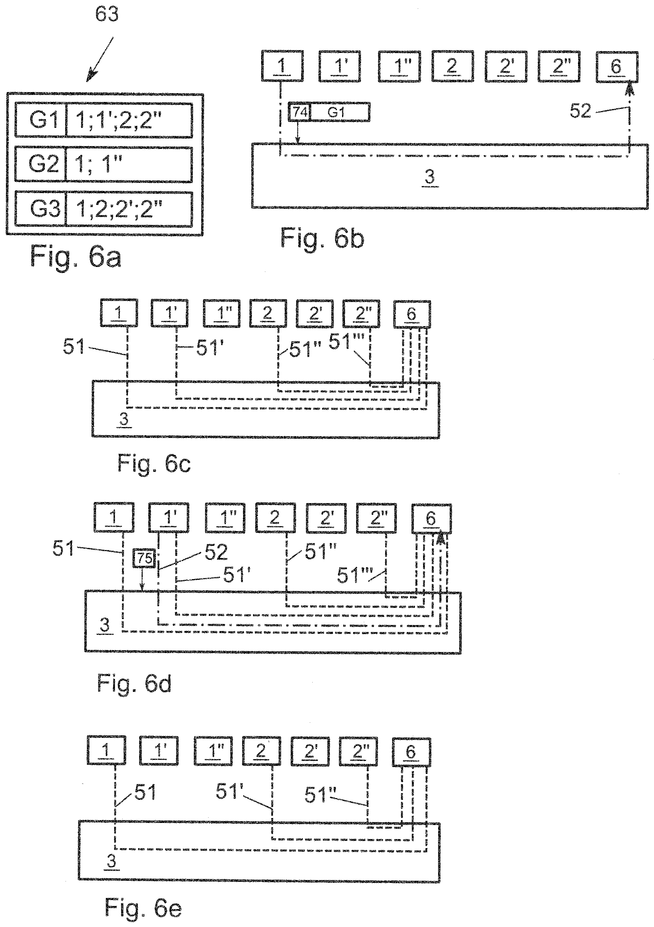

**Fig. 6a** zeigt einen Speicherabschnitt des Verteilungsrechners, mit dem eine Gruppenzuordnung vorgenommen ist. **Fig. 6b** zeigt eine Anfrage einer Kontrollzentrale an den Verteilungsrechner zum Aufbau eines Gruppenrufs. **Fig. 6c** zeigt die sich nach Aufbau des Gruppenrufs einstellende Gesprächssituation. **Fig. 6d** zeigt eine Aufforderung einer Kontrollzentrale an den Verteilungsrechner zum Ausscheiden aus dem Gruppenruf.
**Fig. 6e** zeigt die Gesprächssituation nach Ausscheiden der Kontrollzentrale aus dem Gruppenruf.

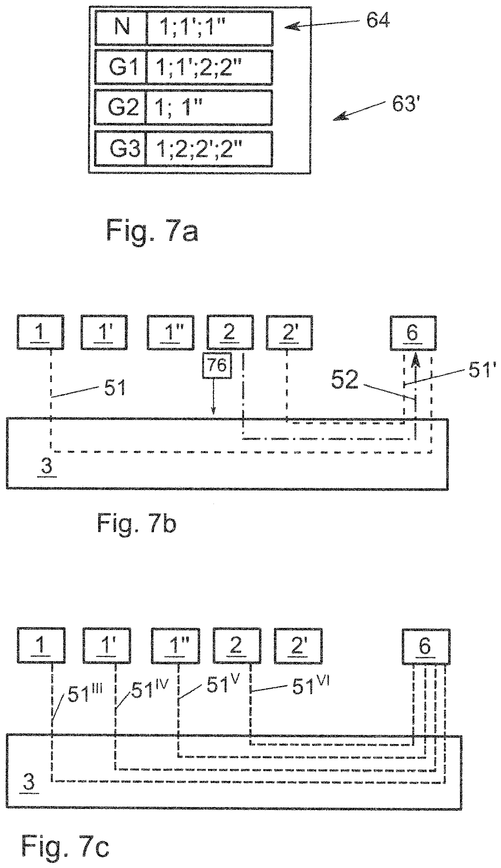

**Fig. 7a** zeigt einen gegenüber **Fig. 6a** erweiterten Speicher, in dem neben den einzelnen Gesprächsgruppen eine zusätzliche Notfallgruppe vorgesehen ist. **Fig. 7b** zeigt eine Gesprächssituation, die während des Einlangens eines Notrufs eines mobilen Endgeräts beim Verteilungsrechner vorliegt. **Fig. 7c** zeigt die Gesprächssituation nach Einlangen des Notrufs und nach Aufbau einer Notrufgruppenschaltung.

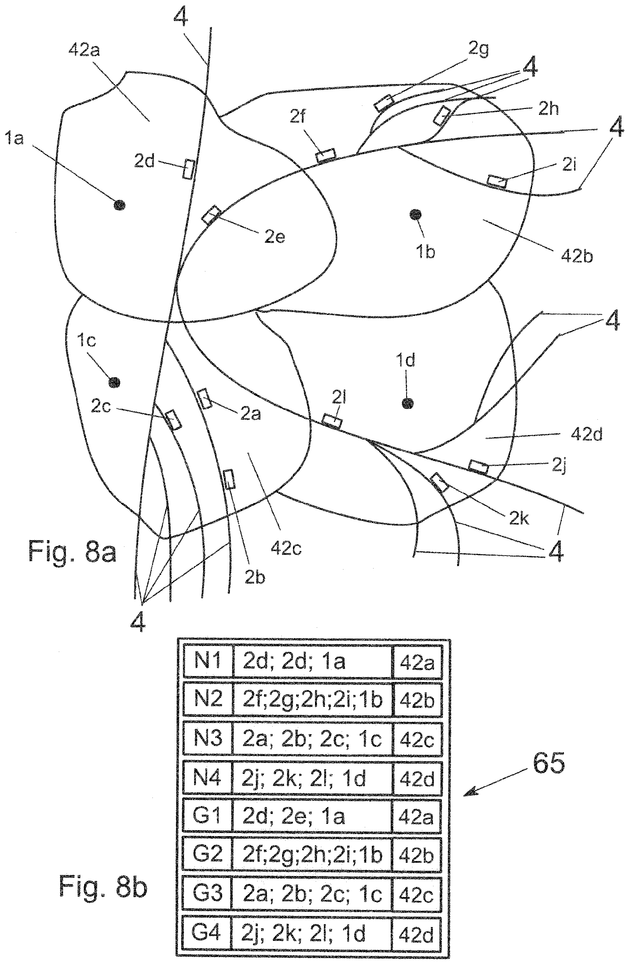

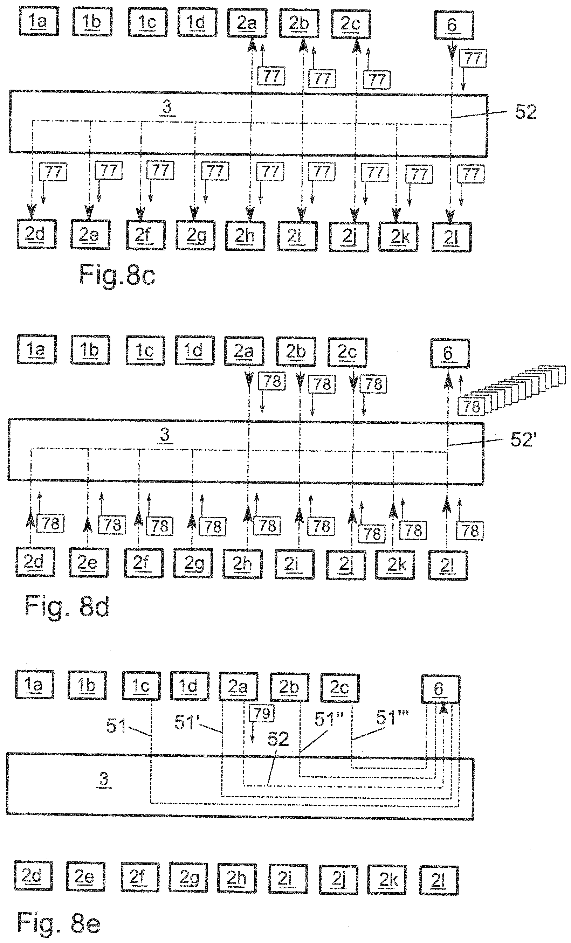

**Fig. 8a** zeigt einen Kartenabschnitt mit einer Anzahl von Kontrollzentralen und mobilen Endgeräten. **Fig. 8b** zeigt einen Gruppen- und Notrufgruppenspeicher. **Fig. 8c** zeigt eine Anfrage zur Übermittlung von geographischen Informationen. **Fig. 8d** zeigt die Übermittlung von geographischen Informationen an den Verteilungsrechner. **Fig. 8e** zeigt eine anhand von geographischen Informationen erstellte Sprechfunkverbindung.

In **Fig. 1** ist ein Schienenabschnitt 4 dargestellt, auf dem sich zwei schienengebundene Fahrzeuge 21 befinden. Beide schienengebundenen Fahrzeuge 21 verfügen über jeweils ein ihnen zugeordnetes mobiles Endgerät 2, im vorliegenden besonderen Ausführungsbeispiel ist das mobile Endgerät 2 als GSM-Mobilfunkgerät ausgebildet, das mittels GSM-Funkverbindung über eine im Bereich der Schienenstrecke 4 befindliche Sendestation 41 an ein GSM-Basisnetzwerk 3 angeschlossen ist. Das Basisnetzwerk 3 steht mit einer Vielzahl solcher im Bereich der Schienenstrecke 4 angeordneten Sendestationen in Datenverbindung und ist zudem noch mit mehreren Kontrollzentralen 1 verbunden. Darüber hinaus ist das Basisnetzwerk 3 auch mit einem Verteilungsrechner 6 verbunden. Die Kontrollzentralen sowie die mobilen Endgeräte, die über das Basisnetzwerk miteinander in Verbindung stehen, werden im Folgenden verallgemeinernd als Kommunikationseinheiten bezeichnet. An das Basisnetzwerk 3 ist als weitere Kommunikationseinheit der zentrale Verteilungsrechner 6 angeschlossen, der ebenso wie die Kontrollzentralen 1, 1' und die mobilen Endgeräte 2, 2' als Kommunikationseinheit fungiert und insbesondere Sprache und Daten über das Basisnetzwerk 3 an andere Kommunikationseinheiten 1, 2 übertragen kann.

Das Basisnetzwerk 3 stellt zur Datenübertragung Kommunikation mit einer der Kommunikationseinheiten 1, 2 oder mit dem Verteilungsrechner 6 sowohl Sprachkanäle 51 zur Übertragung von Sprache als auch Datenkanäle 52 zur digitalen Datenübertragung zur Verfügung. In den folgenden Ausführungsbeispielen wird dargestellt, dass diese beiden Arten von Kommunikationskanälen 51, 52 ausreichend sind, um die eingangs genannten Funktionalitäten bereitzustellen.

Wie in **Fig. 1** dargestellt, weisen die einzelnen Kontrollzentralen 1, die typischerweise der Arbeitsplatz eines Fahrdienstleiters sind, alle Merkmale eines Arbeitsplatzrechners auf und verfügen insbesondere über einen Bildschirm, eine Maus sowie ein auf dem jeweiligen Rechner der Kontrollzentrale 1 ablaufendes Computerprogramm auf, das eine Kommunikation über das Basisnetzwerk 3 ermöglicht.

In **Fig. 2** ist das in **Fig. 1** dargestellte Basisnetzwerk 3 schematisch dargestellt. Insbesondere ist ersichtlich, dass sämtliche Kommunikationseinheiten 1, 1', 2, 2' sowie der Verteilungsrechner 6, der in Bezug auf das Basisnetzwerk 3 eine weitere Kommunikationseinheit darstellt, über das Basisnetzwerk 3 miteinander in Datenverbindung stehen und/oder in Datenverbindung bringbar sind. Grundsätzlich können diese Kommunikationskanäle 51, 52 von jeder der am Basisnetzwerk 3 angeschlossenen Kommunikationseinheiten 1, 2 sowie vom Verteilungsrechner 6 erstellt und aktiviert werden. Im vorliegenden Ausführungsbeispiel ist es jedoch ausreichend, wenn ausschließlich der Vermittlungsrechner 6 zum Aufbau von Sprachkanälen 51 zur Übertragung von Sprache berechtigt ist und die übrigen Kommunikationseinheiten 1, 2 lediglich Datenkanäle 52 zur digitalen Datenübertragung an den Verteilungsrechner 6 berechtigt sind. Natürlich kann es zur Bereitstellung von Direktrufen zwischen den einzelnen Kommunikationseinheiten 1, 2 sowie zur Bereitstellung von zusätzlicher Funktionalität auch möglich sein, den Kommunikationseinheiten 1, 2 den Aufbau von Sprachkanälen 51 und dem Verteilungsrechner den Aufbau von Datenkanälen 52 zu erlauben und/oder zu ermöglichen.

Eine **erste Ausführungsform** der Erfindung wird in den **Fig. 3a und 3b** dargestellt. Aufgabe des Verteilungsrechners 6 ist es, den Aufbau, die Beendigung und die Verwaltung von Sprachkommunikationskanälen 51 zu übernehmen und allenfalls auch die Datenkommunikation von oder zu den einzelnen Kommunikationseinheiten 1, 2 zu steuern. Der Verteilungsrechner 6 wird, wie in **Fig. 3a** dargestellt, bei Einlangen einer Anfrage 7 von einem mobilen Endgerät 2 über einen Datenkanal 52 aktiviert. Der digital codierte Inhalt der Anfrage 7 weist einerseits einen codierten Befehlsteil auf, der angibt, dass der jeweilige Kommunikationsteilnehmer 1, 2 einen Verbindungsaufbau wünscht. Andererseits weist die Anfrage einen Datenteil auf, der die jeweils gewünschten Kommunikationseinheit 1 angibt, mit der eine Sprachverbindung aufgebaut werden soll. Eine solche Angabe des jeweiligen gewünschten Kommunikationspartners bzw. der jeweils gewünschten Kommunikationseinheit 1, 2 erfolgt im einfachsten Fall dadurch, dass eine Kennung der jeweiligen Kommunikationseinheit angegeben wird. Im vorliegenden Ausführungsbeispiel weist die Anfrage 7 einen Datenteil auf, in dem eine Kennung der jeweils gewünschten Kommunikationseinheit 1, 2 enthalten ist. Entsprechend dieser Anfrage 7 stellt der Verteilungsrechner 6 eine Sprachkommunikation zwischen dem mobilen Endgerät 2 und der Kontrollzentrale 1 zur Verfügung und baut zu diesem Zweck über das Basisnetzwerk 3 zwei Sprachkanäle 51, 51' auf. Der erste Sprachkanal 51 dieser beiden Sprachkanäle ermöglicht eine Sprachkommunikation zwischen dem Verteilungsrechner 6 und dem mobilen Endgerät 2, die die Anfrage 7 an den Verteilungsrechner 6 ermittelt hat. Der zweite Sprachkanal 51' verläuft zwischen dem Verteilungsrechner 6 und der in der jeweiligen Anfrage 7 angegebenen oder bestimmbaren Kommunikationseinheit 1.

Anschließend wird auf dem Verteilungsrechner 6 eine Weiterleitung ausgeführt, die während des Bestehens der beiden aufgebauten Sprachkanäle 51, 51' die jeweils beim Verteilungsrechner 6 über diese Sprachkanäle 51, 51' einlangenden Sprachmitteilungen an die jeweils anderen Kommunikationseinheiten 1, 2 weiterleitet. Im vorliegenden Fall werden die von dem anfragenden mobilen Endgerät 2 an den Verteilungsrechner 6 übermittelten Sprachdaten an die gewählte Kontrollzentrale 1 und die von der gewählten Kontrollzentrale 1 an den Vermittlungsrechner 6 übermittelten Sprachdaten an das anfragende mobile Endgerät 2 übermittelt. Auf diese Weise kann über den Verteilungsrechner 6 zwischen den beiden Kommunikationseinheiten 1, 2 eine zweiseitige Sprachkommunikationsverbindung erstellt werden.

In den **Fig. 4a bis 4d** ist eine **zweite Ausführungsform** der Erfindung dargestellt, die einen Anruf an ein schienengebundenes Fahrzeug 21 mit einem mobilen Endgerät 2 ermöglicht, wobei eine Kommunikation mit diesem Fahrzeug bzw. mit diesem mobilen Endgerät 2 unter Angabe einer Kennung, im vorliegenden Fall der Zugnummer des schienengebundenen Fahrzeugs 21 möglich ist. Eine solche Funktionalität ist häufig gewünscht, da das mobile Endgerät entweder fest mit dem Schienenfahrzeug 21 verbunden ist oder aber dem jeweiligen Zugbegleiter oder Zugführer zugeordnet ist. Da jedoch aufgrund des Fahrplans täglich unterschiedliche Zuordnungen zwischen Schienenfahrzeugen und Zugnummern und Personal und Zugnummern vorgenommen wird, ist es nützlich, wenn der Kontrollzentrale ein Anruf über die Zugnummer zur Verfügung steht.

Im vorliegenden Fall sind mit dem Basisnetzwerk 3 zwei mobile Endgeräte 2, 2', die sich jeweils in einem separaten Schienenfahrzeug 21 befinden, verbunden. Zu Beginn des Kommunikationsvorgangs, im vorliegenden Fall etwa bei Abfahrt der jeweiligen Schienenfahrzeuge 21 oder beim Instandsetzen des Schienenfahrzeugs 21 registriert sich jedes der beiden mobilen Endgeräte 2, 2' jeweils über eine Registrierungsanfrage 72, 72' beim Verteilungsrechner 6. Dabei übermittelt das erste mobile Endgerät 2 eine erste Registrierungsanfrage 72 an den Verteilungsrechner 6 über einen ersten Datenkanal 52. Diese erste Registrierungsanfrage 72 enthält die jeweilige Kennung des Schienenfahrzeugs 21, im vorliegenden Fall wird dem Schienenfahrzeug 21 die Zugnummer "127" zugewiesen.

Ebenso übermittelt das zweite mobile Endgerät 2' eine zweite Registrierungsanfrage 72' an den Verteilungsrechner 6 über einen ersten Datenkanal 52. Diese zweite Registrierungsanfrage 72 enthält die jeweilige Kennung des Schienenfahrzeugs 21, im vorliegenden Fall wird dem Schienenfahrzeug 21 die Zugnummer "133" zugewiesen.

Wie auch die in **Fig. 3a und 3b** dargestellte Anfrage 7 enthalten die Registrierungsanfragen 72, 72' jeweils einen Befehlsteil, der angibt dass das jeweilige mobile Endgerät 2, 2' einer Zugnummer zugeordnet werden soll, und einen Datenteil, der die jeweilige zuzuordnende Zugnummer enthält.

Bei der Registrierung der mobilen Endgeräte 2, 2' wird im Verteilungsrechner 6 jeweils ein in **Fig. 4b** dargestellter assoziativer Registrierungsspeicher 61 angelegt, wobei für jedes mobile Endgerät 2, 2' jeweils eine Zuordnung angelegt wird, die als Schlüssel die jeweilige übertragene Zugnummer und als Wert eine interne Kennung des jeweiligen mobilen Endgeräts 2, 2' aufweist.

In **Fig. 4c** ist dargestellt, wie eine Kontrollzentrale 1 alleine bei Kenntnis der Zugnummer eine Sprachkommunikation mit einem Schienenfahrzeug 21 sowie dem darin befindlichen mobilen Endgerät 2' aufbaut. Dem Fahrdienstleiter in der Kontrollzentrale 1 ist lediglich die Zugnummer bekannt, die dem jeweiligen Schienenfahrzeug 21 zugewiesen wurde. Der Fahrdienstleiter in der Kontrollzentrale 1 übermittelt über eine Zugnummernanfrage 73 die ihm bekannte Kennung "133" des gewünschten Schienenfahrzeugs 21 an den Verteilungsrechner 6. Diese Zugnummernanfrage 73 enthält einen Befehlsteil, der angibt, dass der Verteilungsrechner eine Gesprächsverbindung unter Angabe einer Zugnummer erstellen soll und einen Datenteil, der die jeweilige Zugnummer des Schienenfahrzeugs 21 angibt, mit dessen mobilen Endgerät 2' eine Gesprächsverbindung aufgebaut werden soll.

Der Verteilungsrechner 6 prüft daraufhin, ob ein Schienenfahrzeug 21 oder ein mobiles Endgerät 2 mit einer derartigen Zugnummer im Registrierungsspeicher 61 registriert ist und sucht im Fall einer vorliegenden Registrierung die der Zugnummer zugewiesene interne Kennung des mobilen Endgeräts 2' aus dem Registrierungsspeicher 61. Anschließend erstellt der Verteilungsrechner 6, wie in **Fig. 4d** dargestellt, zwei Sprachdatenkanäle 51, 51'. Der erste Sprachdatenkanal 51 verbindet den Verteilungsrechner 6 mit der anfragenden Kontrollzentrale 1. Der zweite Sprachdatenkanal 51' verbindet den Verteilungsrechner 6 mit dem gewünschten mobilen Endgerät 2', das sich in demjenigen Schienenfahrzeug 21 befindet, dem die jeweilige Zugnummer "133" zugewiesen wurde. Zum Aufbau der Sprachverbindung wird dabei die interne Netzwerkkennung aus dem Assoziativspeicher verwendet, die der jeweiligen Zugnummer zugeordnet ist.

Die einzelnen, beim Vermittlungsrechner 6 einlangenden Sprachmitteilungen werden von den beteiligten Kommunikationseinheiten 1, 2' an die jeweils andere Kommunikationseinheit 1, 2' weitergeleitet, sodass eine Gesprächsverbindung zwischen diesen Kommunikationseinheiten 1, 2' besteht.

In den **Fig. 5a bis 5d** ist eine **dritte Ausführungsform** der Erfindung mit einer weiteren aus dem GSM-R Standard bekannten Funktionalität dargestellt, die mit LDA, d.h. location dependent addressing oder positionsabhängige Gesprächsvermittlung, bezeichnet wird. In diesem Fall möchte ein in einem Schienenfahrzeug 21 befindlicher Kommunikationsteilnehmer, beispielsweise ein Zugführer, mit dem für ihn jeweils zuständigen Fahrdienstleiter eine Gesprächsverbindung aufbauen, der eine Kontrollzentrale 1 bedient. Die Zuständigkeit des jeweiligen Fahrdienstleiters und damit die Anwahl der jeweiligen Kontrollzentrale 1, 1', 1", 1'" ergibt sich aus einer vorab vorgegebenen Einteilung, die in **Fig. 5a** dargestellt ist. **Fig. 5a** zeigt einen Landkartenabschnitt, wobei eine Anzahl von Kontrollzentralen 1, 1', 1", 1'" örtlich dargestellt ist, die jeweils für einen bestimmten geographischen Abschnitt 42, 42', 42", 42'" zuständig sind. Weiters ist eine Schienenstrecke 4 dargestellt, die durch die geographischen Abschnitte 42, 42', 42 und 42'" verläuft. Auf dieser Schienenstrecke 4 ist ein Schienenfahrzeug 21 dargestellt, in dem ein mobiles Endgerät 2 angeordnet ist.

Das Schienenfahrzeug 21 befindet sich im geographischen Abschnitt 42, der der Kontrollzentrale 1 zugeordnet ist bzw. für den die Kontrollzentrale 1 zuständig ist. Eine solche Zuordnung der einzelnen geographischen Abschnitte 42, 42', 42", 42'" zu Kontrollzentralen 1, 1', 1", 1'" ist in **Fig. 5c** näher dargestellt. Diese Zuordnung ist in einem separaten Zuordnungsspeicher 62 im Verteilungsrechner 6 abgespeichert. Im Verteilungsrechner 6 ist zudem eine Funktion implementiert, dass für jede beliebige angegebene geographische Position jeweils ermittelt wird, ob und gegebenenfalls welche der Kontrollzentralen 1, 1', 1", 1'" für eine jeweils angegebene geographische Position zuständig ist, innerhalb der sich ein mobiles Endgerät 2 bzw. innerhalb der sich das jeweilige Schienenfahrzeug 21 befindet.

Das mobile Endgerät 2 im Schienenfahrzeug 21 weist ein GPS-Gerät auf, das die Detektion der jeweiligen geographischen Position des Schienenfahrzeugs 21 und des mobilen Endgeräts 2 ermöglicht. Grundsätzlich kann jedoch auch jede andere Einrichtung zur Detektion der Position des mobilen Endgeräts herangezogen werden, insbesondere kann die Position des jeweiligen mobilen Endgeräts auch mittels der Sendestationen 41 geortet werden.

In **Fig. 5b** ist nun dargestellt, wie eine Verbindung des mobilen Endgeräts 2 zur jeweiligen zuständigen Kontrollzentrale 1 aufgebaut wird. In einem ersten Schritt wird eine LDA-Anfrage 71 erstellt. Diese LDA-Anfrage 71 weist einen Befehlsteil auf, der angibt, dass das jeweilige mobile Endgerät 2 mit seiner zuständigen Kontrollzentrale 1 in Sprechverbindung treten möchte, und einen Datenteil, der die jeweilige geographische Position des mobilen Endgeräts 2 enthält.

Die LDA-Anfrage 71 wird über einen Datenkanal 52 vom mobilen Endgerät 2 zum Verteilungsrechner 6 übermittelt. Der Verteilungsrechner 6 verfügt über den in **Fig. 5c** dargestellten Zuordnungsspeicher 62 sowie über einen nicht dargestellten Speicher, der die jeweilige Begrenzung der geographischen Abschnitte 42, 42', 42", 42" enthält. Der Verteilungsrechner 6 ermittelt anhand der vorgegebenen geographischen Koordinaten des mobilen Endgeräts 2 sowie anhand der im Speicher befindlichen Begrenzungen der geographischen Abschnitte 42, 42', 42", 42", ob und in welchem der Abschnitte 42, 42', 42", 42" sich das mobile Endgerät 2 befindet. Nach dieser Ermittlung steht, wie in **Fig. 5c** dargestellt, fest, dass für das mobile Endgerät 2 die Kontrollzentrale 1 zuständig ist. Anschließend baut der Verteilungsrechner 6 jeweils einen Sprachkanal 51, 51' vom Verteilungsrechner 6 zur Kontrollzentrale 1 sowie vom Verteilungsrechner 6 zum mobilen Endgerät 2 auf.

Wie in den vorangehenden Ausführungsbeispielen der Erfindung werden die einzelnen, beim Vermittlungsrechner 6 einlangenden Sprachmitteilungen von den beteiligten Kommunikationseinheiten 1, 2 an die jeweils andere Kommunikationseinheit 1, 2 weitergeleitet, sodass wiederum eine zweiseitige Gesprächsverbindung zwischen diesen beiden Kommunikationseinheiten 1, 2 erstellt wird.

Eine **vierte bevorzugte Ausführungsform** der Erfindung ist in den **Fig. 6a bis 6e** dargestellt, wobei eine Kommunikationsverbindung mehrerer mit dem Basisnetzwerk 3 in Verbindung stehender Kommunikationseinheiten 1, 1', 1", 2, 2', 2" aufgebaut werden soll. Eine solche zwischen mehreren Kommunikationseinheiten 1, 1', 1", 2, 2', 2" aufgebaute Kommunikationsverbindung wird im Folgenden auch als Gruppenruf bezeichnet. Um einen einfachen Aufbau eines Gruppenrufs zu gewährleisten, liegt im Verteilungsrechner 6 ein Gruppenspeicher 63 für Gesprächsgruppen vor (**Fig. 6a**), wobei jeder Gesprächsgruppe G1, G2, G3 jeweils eine Gruppenkennung "G1", "G2", "G3" sowie die der Gruppe G1, G2, G3 zugeordneten Kommunikationseinheiten 1, 1', 1", 2, 2', 2" zugeordnet und abgespeichert sind.

In **Fig. 6b** ist dargestellt, dass die erste Kommunikationszentrale 1 einen solchen Gruppenruf initiieren will. Zu diesem Zweck übermittelt sie eine Gruppenrufanfrage 74 unter Angabe der vorgegebenen Gruppe G1 an den Verteilungsrechner 6.

Die Gruppenrufanfrage 74 enthält jeweils einen Befehlsteil, der angibt, dass die jeweilige Kommunikationseinheit einen Gruppenruf mit einer vorgegebenen Gesprächsgruppe G1 ausführen möchte, und einen Datenteil, der die jeweilige zuzuordnende Gruppenkennung enthält.

Die Übermittlung der Gruppenrufanfrage 74 von der Kommunikationszentrale 1 an den Verteilungsrechner 6 erfolgt über einen Datenkanal 52. Dieser Datenkanal 52 wird von der Kontrollzentrale 1 zur Übertragung der Gruppenrufanfrage 74 genutzt und nach Übermittlung der Gruppenrufanfrage 74 wieder geschlossen.

Der Verteilungsrechner 6, der über den in **Fig. 6a** dargestellten Gruppenspeicher 63 für Gesprächsgruppen verfügt, ermittelt nun, welche Kommunikationseinheiten 1, 2 der jeweiligen angefragten Gesprächsgruppe G1 zugeordnet sind. Im vorliegenden Fall handelt es sich dabei um die beiden Kommunikationszentralen 1, 1' sowie um die beiden mobilen Endgeräte 2, 2". Nachdem die Gruppenrufanfrage 74 beim Verteilungsrechner 6 eingelangt ist, baut der Verteilungsrechner 6 nunmehr eine Vielzahl von einzelnen Sprachkanälen 51, 51', 51", 51'" zu den einzelnen, der Gruppe G1 zugeordneten Kommunikationseinheiten 1, 1', 2, 2" auf.

Der Verteilungsrechner 6 leitet nach dem Aufbau der Sprachkanäle 51, 51', 51", 51'" sämtliche bei ihm einlangenden Sprachmitteilungen der einzelnen der jeweiligen Gruppe G1 zugeordneten Kommunikationseinheiten 1, 1', 2, 2" an alle anderen der jeweiligen Gruppe G1 zugeordneten Kommunikationseinheiten 1, 1', 2, 2" weiter. Wenn beispielsweise das mobile Endgerät 2 eine Sprachmitteilung abgibt, wird diese Sprachmitteilung über den Verteilungsrechner 6 an sämtliche weiteren dieser Gruppe G1 zugeordneten Kommunikationseinheiten 1, 1', 2" übermittelt.

Im Verlauf einer Gruppenkommunikation kann die Anforderung bestehen, dass einzelne Kommunikationsteilnehmer bzw. Kommunikationseinheiten 1' aus der Kommunikation ausscheiden möchten, wenn die Notwendigkeit für die Teilnahme des einen Teilnehmers am Gruppenruf erlischt, die übrigen Teilnehmer jedoch den Gruppenruf untereinander fortsetzen möchten. In diesem Fall besteht die Möglichkeit, dass die Kommunikationseinheiten 1, 1', 2, 2" dem jeweiligen Benutzer die Option zum Beenden der Sprachverbindung bieten. Hierfür übermittelt die jeweilige Kommunikationseinheit 1, 1', 2, 2" eine Beendigungsmitteilung 75 über einen Datenkanal 52 an den Verteilungsrechner 6. Diese Beendigungsmitteilung 75 braucht lediglich einen Befehlsteil zu enthalten. Allenfalls, insbesondere wenn mehrere Sprachverbindungen parallel möglich sind, kann im Datenteil der Beendigungsmitteilung 75 angegeben werden, dass die Gruppenverbindung zur Gesprächsgruppe G1 unterbrochen werden soll, sodass dem Datenteil der Beendigungsmitteilung 75 die Kennung der Gruppe G1 zugewiesen wird.

Die zweite Kommunikationseinheit 1' baut einen weiteren Datenkanal 52' zum Verteilungsrechner 6 auf und übermittelt die Beendigungsmitteilung 75 über diesen weiteren Datenkanal 52' an den Verteilungsrechner 6. Nach Erhalt dieser Beendigungsmitteilung beendet der Verteilungsrechner 6 den Sprachkanal 51" zwischen dem Verteilungsrechner 6 und der zweiten Kontrollzentrale 1'. Nach der Beendigung dieses Sprachkanals 51' bestehen weiterhin die einzelnen Sprachkanäle 51, 51", 51'", sodass weiterhin eine Gruppenkommunikation zwischen der ersten Kontrollzentrale 1 und den mobilen Endgeräten 2, 2' möglich ist, während die zweite Kontrollzentrale 1' nicht mehr am Gruppenruf teilnimmt. Diese Situation ist in **Fig. 6e** näher dargestellt.

Eine **fünfte Ausführungsform** der Erfindung ist in den **Fig. 7a bis 7c** dargestellt, wobei eine Notrufschaltung näher erläutert wird. In **Fig. 7a** ist ein erweiterte Gruppenspeicher 63' dargestellt, der neben den in **Fig. 6a** dargestellten Gesprächsgruppen G1, G2, G3 auch einen Notrufgruppenspeicher 64 für eine Notrufgruppe N aufweist. Dieser Notrufgruppenspeicher 64 weist Speicherplatz für eine weitere Gruppe, die im Folgenden als Notrufgruppe N bezeichnet wird, auf. Der Notrufgruppe N ist einerseits die Gruppenkennung "N" andererseits eine Anzahl von Gruppenmitgliedern, im vorliegenden Fall sind dies die drei Kontrollzentralen 1, 1', 1", zugeordnet. In **Fig. 7b** ist eine Gesprächssituation dargestellt, bei der gerade eine Sprachdatenverbindung zwischen der Kontrollzentrale 1 und dem mobilen Endgerät 2' besteht, die über den Verteilungsrechner 6 vermittelt wird, wobei jeweils ein Sprachdatenkanal 51, 51' zwischen dem Verteilungsrechner 6 und der Kontrollzentrale 1 bzw. dem mobilen Endgerät 2' besteht. Das mobile Endgerät 2 übermittelt einen Notruf 76 an den Verteilungsrechner 6. Der Notruf 76 weist lediglich einen Befehlsteil auf, der eine entsprechende Notruf-Codierung enthält. Der Notruf 76 wird über einen Datenkanal 52 an den Verteilungsrechner 6 übermittelt. Es ist auch möglich, dass weitere Notruf-Gruppen bestehen. In diesem Fall würde der Notruf einen Datenteil aufweisen, der eine Kennung der jeweiligen Notruf-Gruppen enthält.

Der Verteilungsrechner 6 fragt daraufhin den assoziativen Notrufgruppenspeicher 64 ab und ermittelt sämtliche Kommunikationseinheiten 1, 1', 1", die der Notruf-Gruppe N zugeordnet sind. Da eine der der Notrufgruppe N zugeordneten Kontrollzentralen 1 im Moment gerade eine Datenverbindung unterhält, werden diese Datenverbindung und die mit dieser im Zusammenhang stehenden Sprachkanäle 51, 51' beendet bzw. unterbrochen. Anschließend wird, wie bereits auch in **Fig. 6c** dargestellt, eine Datenkommunikation aufgebaut, wobei ein Gruppenruf mit sämtlichen an der Notrufgruppe N beteiligten Kommunikationsteilnehmern 1, 1', 1" ermöglicht wird. Im vorliegenden Fall ist das notrufende externe mobile Endgerät 2 zwar nicht in der Notrufgruppe N enthalten, wird jedoch wie ein Mitglied der Notrufgruppe N behandelt und mit sämtlichen in der Notrufgruppe N befindlichen Kontrollzentralen 1, 1', 1" verbunden. Die Verbindung erfolgt dabei, indem der Verteilungsrechner 6 jeweils einen Sprachkanal 51'", 51^{IV}, 51^{V}, 51^{VI} mit sämtlichen in der Notrufgruppe befindlichen Kontrollzentralen 1, 1', 1" sowie mit dem notrufenden mobilen Endgerät 2 erstellt. Wie auch beim Gruppenruf werden Sprachmitteilungen, die von einzelnen Kommunikationseinheiten 1, 1', 1", 2, die am Notruf beteiligt sind, an die jeweils anderen am Notruf beteiligten Kommunikationseinheiten 1, 1', 1", 2 weitergeleitet.

Nach dem Ende der durch den Notruf 76 ausgelösten Sprachverbindung oder bereits nach dem Ausscheiden eines Kommunikationsteilnehmers 1 aus der Notrufkommunikation besteht selbstverständlich die Möglichkeit, dass dieser die ursprünglich geführte Kommunikation wieder aufnimmt. Allenfalls besteht auch die Möglichkeit, dass diese solcherart beendeten oder unterbrochenen Sprachkanäle 51, 51' durch Erstellung erneuter Sprachverbindungen fortgesetzt oder wieder hergestellt wird.

In den **Fig. 8a bis 8e** ist eine **sechste Ausführungsform** der Erfindung dargestellt. In **Fig. 8a** ist ein geographischer Teilbereich dargestellt, der vier geographische Abschnitte 42a, 42b, 42c, 42d darstellt. Weiters ist in **Fig. 8a** eine Anzahl von Schienenstrecken 4 dargestellt, auf denen sich eine Anzahl von Schienenfahrzeugen 21 befinden. In jedem der Schienenfahrzeuge 21 befindet sich jeweils ein mobiles Endgerät 2a, ..., 2l. Jedes mobile Endgerät 2a, ..., 2l, verfügt jeweils über eine Einheit zur Ermittlung seiner geographischen Position. Bei der vorliegenden Ausführungsform werden hierfür GPS-Geräte verwendet.

Besonders vorteilhaft bei dieser Ausführungsform der Erfindung ist, dass eine Möglichkeit zum Aufbau einer Kommunikation mit den jeweiligen innerhalb eines gemeinsamen geographischen Abschnitts 42a-42d befindlichen mobilen Endgeräten 2 ermöglicht wird. Auf diese Art können Gruppenrufe und Gruppennotrufe zwischen denjenigen mobilen Endgeräten durchgeführt werden, die sich innerhalb desselben geographischen Abschnitts 42a-42d befinden.

Wie in **Fig. 8c** dargestellt, stellt der Verbindungsrechner 6 mit sämtlichen mobilen Endgeräten 2a-2l eine Datenverbindung über einen ersten Datenkanal 52 her und übermittelt eine Positionsanfrage 77 an jedes der einzelnen mobilen Endgeräte 2. Die mobilen Endgeräte 2 senden jeweils eine Positionsmeldung 78 über einen zweiten Datenkanal 72 an den Verbindungsrechner 6 zurück.

Der Verbindungsrechner 6 verfügt in dieser Ausführungsform der Erfindung über die im Zusammenhang mit der in den **Fig. 5a-5d** dargestellten Ausführungsform gezeigte Funktionalität, für die einzelnen mobilen Endgeräte 2 jeweils die Prüfung ermöglicht, ob und gegebenenfalls in welchem der geographischen Abschnitte 42a-42d sich das mobile Endgeräte 2 befindet.

Nachdem für jedes der mobilen Endgeräte jeweils untersucht wurde, ob sich dieses mobile Endgerät 2 in einem der geographischen Abschnitte 42a-42d befindet, wird ein in **Fig. 8b** dargestellter Gruppen- und Notrufgruppenspeicher 65 erstellt oder aktualisiert. Dieser Gruppen- und Notrufgruppenspeicher 65 weist für jeden der geographischen Abschnitte 42a-42d jeweils eine Gruppe G1, G2, G3, G4 und jeweils eine Notrufgruppe N1, N2, N3, N4 auf. Gemeinsam mit der jeweiligen Gruppenkennung oder Notrufgruppenkennung werden jeweils eine Kennung des geographischen Abschnitts 42a-42d sowie die Menge der Kennungen der im jeweiligen geographischen Abschnitt 42a-42d befindlichen mobilen Endgeräte 2 gespeichert.

Möchte nun eines der mobilen Endgeräte 2a eine Verbindung oder Notrufverbindung zu sämtlichen mit ihm im selben geographischen Abschnitt 42a-42d befindlichen mobilen Endgeräten 2b, 2c sowie zur zuständigen Kontrollzentrale 1c aufnehmen, so übermittelt das Mobile Endgeräte 2a eine lokale Gruppenanfrage 79 an den Verteilungsrechner 6. Der Verteilungsrechner 6 baut anschließend jeweils einen Sprachkanal 51, 51', 51", 51"' zu jedem der in der jeweiligen Gruppe G3 befindlichen auf und leitet die Sprachmitteilung jeder der Kommunikationseinheiten 2a, 2b, 2c, 1c der Gruppe G3 an die jeweils anderen Kommunikationseinheiten 2a, 2b, 2c, 1c der Gruppe G3 weiter, sodass eine Gruppensprachverbindung erstellt wird.

Wenn beispielsweise eines der mobilen Endgeräte 2f einen Gruppennotruf an den Verteilungsrechner 6 abgesendet (nicht in den Fig. dargestellt), so werden sämtliche bestehenden Sprachkanäle zu denjenigen Kommunikationseinheiten 2g, 2h, 2i, 1b unterbrochen, die sich in derselben Gruppe G2 befinden wie dieses mobile Endgerät 2f. Anschließend wird, wie vorstehend dargestellt, eine Gruppenkommunikation zwischen den Kommunikationseinheiten 2f, 2g, 2h, 2i, 1b aufgebaut, indem zunächst für jede der Kommunikationseinheiten 2f, 2g, 2h, 2i, 1b der Gruppe G2 jeweils ein Sprachkanal zum Verteilungsrechner 6 aufgebaut wird und anschließend der Verteilungsrechner 6 die bei ihm einlangenden Sprachdaten einer der Kommunikationseinheiten 2f, 2g, 2h, 2i, 1b der Gruppe G2 an die jeweils anderen Kommunikationseinheiten 2f, 2g, 2h, 2i, 1b der Gruppe G2 weiterleitet.

Anstelle des in den Ausführungsbeispielen verwendeten GSM-Netzwerks als Basisnetzwerk 3 ist es selbstverständlich ohne weiteres möglich, auch ein Tetra-Netzwerk oder ein LTE-Netzwerk zu verwenden. Für den Aufbau von Datenkanälen 52 sowie für die Datenübermittlung kann die für das jeweilige Basisnetzwerk 3 vorgesehene Signalisierung mittels Kurzmitteilungen verwendet werden. Bei GSM bietet sich hierbei insbesondere SMS, für Tetra-Netzwerke SDS an.

Alternativ kann auch vorgesehen sein, dass das Basisnetzwerk 3 ein analoges Funknetzwerk ist. Um hier die entsprechende erforderliche Datenübertragung bzw. Erstellung eines Datenkanals 52 zu ermöglichen, kann ein Modem vorgesehen sein, das jeweils an der Funkschnittstelle angeordnet ist. Zur Übertragung der Daten zwischen dem Basisnetzwerk 3 und den mobilen Endgeräten über die Luftschnittstelle besteht hierbei die Möglichkeit, dass zu übertragende Daten in ein den Sprachdaten überlagertes Analogsignal kodiert werden und am Ende des Datenkanals 52 in den Sprachdaten vorliegende überlagerte kodierte Daten dekodiert und diese Daten wiederum in digitaler Form zur Verfügung gehalten werden. Auf diese Art und Weise können somit Digitaldaten über ein analoges Funknetzwerk übertragen werden und digitale Datenkanäle 52 erstellt werden.

## Patentansprüche

1. Netzwerk zur Datenkommunikation und zum Datenaustausch zwischen Kommunikationseinheiten (1, 2),
a) umfassend ein Basisnetzwerk (3) sowie eine Anzahl von an das Basisnetzwerk (3) angeschlossenen Kommunikationseinheiten (1, 2), nämlich
- zumindest eine Kontrollzentrale (1) und
- zumindest ein in einem an Schienen (4) gebundenen Fahrzeug (21) befindliches und/oder angeordnetes mobiles Endgerät (2),
b) wobei das Basisnetzwerk (3) an eine Anzahl von entlang der Schienenstrecke (4) befindlichen Sendestationen (41) angeschlossen ist,
c) vom Basisnetzwerk (3) zu den in den Fahrzeugen (21) befindlichen mobilen Endgeräten (2) über die Sendestationen (41), insbesondere ausschließlich, zwei Arten von Kommunikationskanälen (51, 52) über Funk zur Verfügung stehen, nämlich
- ein Sprachkanal (51) zur Übertragung von Sprache und
- ein Datenkanal (52) zur digitalen Datenübertragung, und
d) wobei das Basisnetzwerk (3) jeweils auf Anfrage einer Kommunikationseinheit (1, 2) einen oder mehrere Kommunikationskanäle (51, 52) zur Datenübertragung zwischen, insbesondere ausschließlich, zwei Kommunikationseinheiten (1, 2) erstellt, wobei
e) an das Basisnetzwerk (3) als weitere Kommunikationseinheit ein zentraler Verteilungsrechner (6) zum Aufbau, zur Beendigung und zur Verwaltung eines oder mehrerer Kommunikationskanäle (51, 52) zur Daten- und/oder Sprachkommunikation über das Basisnetzwerk (3) zwischen dem Verteilungsrechner (6) und den Kommunikationseinheiten (1, 2) angeschlossen ist,
f) der Verteilungsrechner (6) bei Einlangen einer Anfrage (7) einer Kommunikationseinheit (1, 2) über einen Datenkanal (52) aktivierbar ist und eine Sprachkommunikation über jeweils einen Sprachkanal (51) sowohl zur anfragenden Kommunikationseinheit (21) als auch einer oder mehreren durch die jeweilige Anfrage (7) angegebenen oder bestimmbaren Kommunikationseinheiten (1, 2) erstellt und aufrecht erhält, und
g) der Verteilungsrechner (6) während des Bestehens der derart aufgebauten Sprachkanäle (51, 51') bei ihm einlangende Sprachmitteilungen an die übrigen der durch die jeweilige Anfrage (7) angegebenen oder bestimmten Kommunikationseinheiten (1, 2) weiterleitet,
**dadurch gekennzeichnet, dass**
- das Basisnetzwerk (3) ein TETRA- oder LTE-Netzwerk ist oder ein GSM- aber nicht GSM-R-Netzwerk ist, wobei der Aufbau von Datenkanälen (52) über eine Signalisierung mittels Kurzmitteilungen, insbesondere SMS oder SDS, erfolgt, oder- das Basisnetzwerk (3) ein analoges Funknetzwerk ist, wobei zur Übertragung der Daten zwischen dem Basisnetzwerk (3) und den mobilen Endgeräten (2) jeweils ein Modem vorgesehen ist, das zu Übertragende Daten in ein den Sprachdaten überlagertes Analogsignal codiert und in den Sprachdaten vorliegende überlagerte codierte Daten decodiert und diese Daten in digitaler Form zur Verfügung hält.

2. Netzwerk nach Anspruch 1, **dadurch gekennzeichnet, dass**
a) eine Kommunikationseinheit (1, 2), insbesondere jedes mobile Endgerät (2), die Anmeldung beim Verteilungsrechner (6) ermöglicht, indem das mobile Endgerät (2) seinen jeweiligen Benutzer zur Eingabe einer Kennung, insbesondere einer Zugnummer, auffordert und diese Kennung gemeinsam mit oder als Teil einer Registrierungsanfrage (72) an den Verteilungsrechner (6) übermittelt,
b) der Verteilungsrechner (6) bei Einlangen einer solchen Registrierungsanfrage (72) die angegebene und übermittelte Kennung der internen Netzwerkkennung, insbesondere Einwahlnummer oder Telefonnummer, des sich anmeldenden mobilen Endgeräts (2) zuordnet und in einem Registrierungsspeicher (61) abspeichert, und
c) der Verteilungsrechner (6) bei Anfrage einer Sprachkommunikation unter Angabe der jeweiligen Kennung durch einen anderen der Kommunikationseinheiten (1, 2) einen Sprachkanal (51, 51') zum mobilen Endgerät (2) mit der der Kennung zugeordneten internen Netzwerkkennung aufbaut und jeweils Sprachmitteilungen von dem angemeldeten mobilen Endgerät (2) und der anfragenden anderen Kommunikationseinheit (1, 2) weiterleitet.

3. Netzwerk nach einem der vorangehenden Ansprüche, **dadurch gekennzeichnet, dass**
a) eine Anzahl von Kontrollzentralen (1) vorgesehen sind, die jeweils für die Regelung von bestimmten geographischen Abschnitten (42) zuständig sind, wobei der Verteilungsrechner (6) eine Zuordnung von geographischen Positionen zu den einzelnen Kontrollzentralen (1) enthält, und in einem Zuordnungsspeicher (62) zur Verfügung hält,
b) zumindest ein mobiles Endgerät (2) eine Einrichtung zur Detektion seiner geographischen Position, insbesondere ein GPS-Gerät, aufweist,
c) das jeweilige mobile Endgerät (2) auf Anwahl seines Benutzers eine LDA-Anfrage (71) unter Angabe seiner geographischen Position an den Verteilungsrechner (6) übermittelt,
d) der Verteilungsrechner (6) bei Einlangen einer solchen LDA-Anfrage (71) einen Sprachkanal (51, 51') zum anfragenden mobilen Endgerät (2) sowie zur jeweiligen der angegebenen geographischen Position zugeordneten Kontrollzentrale (1) erstellt, und
e) der Verteilungsrechner (6) Sprachmitteilungen zwischen dem anfragenden mobilen Endgerät (2) und der ermittelten Kontrollzentrale (1) weiterleitet.

4. Netzwerk nach einem der vorangehenden Ansprüche, **dadurch gekennzeichnet,**
a) **dass** der Verteilungsrechner (6) einen Gruppenspeicher (63) für Gesprächsgruppen (G1, G2, G3) aufweist, wobei jeder Gesprächsgruppe (G1, G2, G3) jeweils eine Gruppenkennung sowie die der jeweiligen Gesprächsgruppe (G1, G2, G3) zugeordneten Kommunikationseinheiten (1, 2) zugeordnet sind,
b) **dass** eine Kommunikationseinheit (1, 2) bei Aktivierung unter Angabe einer Gruppenkennung durch ihren jeweiligen Benutzer eine Gruppenrufanfrage (74) an den Verteilungsrechner (6) mit der jeweiligen Gruppenkennung (G1, G2, G3) übermittelt,
c) **dass** der Verteilungsrechner (6) bei Vorliegen einer Gruppenrufanfrage (74) mit einer angegebenen Gruppenkennung (G1, G2, G3) jeweils einen Sprachkanal (51, 51', 51", 51'") zu sämtlichen der Gruppe (G1, G2, G3) zugehörigen Kommunikationseinheiten (1, 2) aufbaut, und
d) **dass** der Verteilungsrechner (6) nach Aufbau der Sprachkanäle (51, 51', 51", 51'") Sprachmitteilungen zwischen den der jeweiligen Gruppe (G1, G2, G3) zugeordneten Kommunikationseinheiten (1, 2) und gegebenenfalls der anfragenden Kommunikationseinheit (1, 2) weiterleitet,
e) wobei insbesondere der Verteilungsrechner (6) einen Sprachkanal (51, 51', 51", 51'") nur dann aufbaut, wenn die anfragende Kommunikationseinheit (1, 2) der jeweiligen Gruppe (G1, G2, G3) zugeordnet ist.

5. Netzwerk nach einem der vorangehenden Ansprüche, **dadurch gekennzeichnet, dass**
a) dass der Verteilungsrechner (6) einen Notrufgruppenspeicher (64) aufweist, wobei der Notruf-Gruppe jeweils eine Gruppenkennung sowie die der Notruf-Gruppe (N) zugeordneten Kommunikationseinheiten (1, 2) zugeordnet sind,
b) dass eine Kommunikationseinheit (1, 2) bei Aktivierung unter Angabe einer Notruf-Kennung durch ihren jeweiligen Benutzer einen Notruf (76) an den Verteilungsrechner (6) übermittelt,
c) dass der Verteilungsrechner (6) bei Vorliegen eines Notrufs (76) eine Sprachkommunikation zu sämtlichen der Notruf-Gruppe (N) zugehörigen Kommunikationseinheiten (1, 2) aufbaut,
d) dass der Verteilungsrechner (6) nach Aufbau der Sprachkommunikation Sprachmitteilungen zwischen den der Notruf-Gruppe (N) zugeordneten Kommunikationseinheiten (1, 2) und der den Notruf (76) absendenden Kommunikationseinheit (1, 2) weiterleitet, und
e) dass der Verteilungsrechner (6) vor dem Aufbau der Sprachkanäle (51"', 51^{IV}, 51^{V}, 51^{VI}) mit Kommunikationseinheiten (1, 2) aus der Notrufgruppe (N) bestehende Sprachkanäle (51, 51', 51") zu diesen Kommunikationseinheiten (1, 2) unterbricht und/oder beendet und gegebenenfalls nach dem Ende die durch den Notruf (76) beendeten und/oder unterbrochenen Sprachkanäle (51, 51', 51") fortsetzt und/oder erneut herstellt.

6. Netzwerk nach einem der vorangehenden Ansprüche, **dadurch gekennzeichnet, dass** die Kommunikationseinheiten (1, 2) unmittelbar ausschließlich mit dem Verteilungsrechner (6) in Daten- und/oder Sprachkommunikation stehen und/oder dass Sprach- und/oder Datenkanäle (51, 52) ausschließlich zwischen dem Verteilungsrechner (6) und einer Kommunikationseinheit (1, 2) aufgebaut werden.

7. Netzwerk nach einem der vorangehenden Ansprüche, **dadurch gekennzeichnet, dass**
a) die Kommunikationseinheiten (1, 2) dem jeweiligen Benutzer die Option zum Beenden einer Sprachverbindung bieten,
b) dass die Kommunikationseinheiten (1, 2) bei Anwahl dieser Option durch den Benutzer eine Beendigungsmitteilung (75) über einen Datenkanal (52) an den Verteilungsrechner (6) übermitteln, der die Sprachverbindung zwischen der Kommunikationseinheit (1, 2) und dem Verteilungsrechner (6) trennt.

8. Netzwerk nach Anspruch 7, **dadurch gekennzeichnet, dass** der Verteilungsrechner (6) für den Fall, dass eine Weiterleitung von Sprachmitteilungen innerhalb einer Gruppe (G) oder Notruf-Gruppe (N) von Kommunikationseinheiten (1, 2) besteht und sich nach der Trennung der Sprachverbindung lediglich eine einzige Kommunikationseinheit (1, 2) in der jeweiligen Gesprächsgruppe oder Notrufgruppe (G, N) befindet oder die jeweilige Gesprächsgruppe oder Notrufgruppe (G, N) nach Ausscheiden der jeweiligen Kommunikationseinheit (1, 2) eine einen vorgegebenen Schwellenwert unterschreitende Anzahl von Teilnehmern aufweist, die Verbindung zu sämtlichen der Gesprächsgruppe oder Notrufgruppe (G, N) zugehörigen Kommunikationseinheiten (1, 2) trennt.

9. Netzwerk nach einem der vorangehenden Ansprüche, **dadurch gekennzeichnet, dass** Sprachkanäle (51) ausschließlich vom Verteilungsrechner (6) initiiert sind.

10. Verfahren zur Datenkommunikation und zum Datenaustausch zwischen Kommunikationseinheiten (1, 2),
a) mit einem Basisnetzwerk (3) sowie einer Anzahl von an das Basisnetzwerk (3) angeschlossenen Kommunikationseinheiten (1, 2), nämlich
- zumindest einer Kontrollzentrale (1) und
- zumindest einem in einem an Schienen (4) gebundenen Fahrzeug (21) befindliches und/oder angeordnetes mobiles Endgerät (2),
b) wobei das Basisnetzwerk (3) an eine Anzahl von entlang der Schienenstrecke (4) befindlichen Sendestationen (41) angeschlossen ist,
c) wobei vom Basisnetzwerk (3) zu den in den Fahrzeugen (21) befindlichen mobilen Endgeräten (2) über die Sendestationen (41), insbesondere ausschließlich, zwei Arten von Kommunikationskanälen (51, 52) über Funk zur Verfügung stehen, nämlich
- ein Sprachkanal (51) zur Übertragung von Sprache und
- ein Datenkanal (52) zur digitalen Datenübertragung, und
d) wobei das Basisnetzwerk (3) jeweils auf Anfrage einer Kommunikationseinheit (1, 2) einen oder mehrere Kommunikationskanäle (51, 52) zur Datenübertragung zwischen, insbesondere ausschließlich, zwei Kommunikationseinheiten (1, 2) erstellt,
e) mit einer der Kommunikationseinheit (1, 2) eine Anfrage (7) über einen Datenkanal (52) an einen an das Basisnetzwerk (3) als weitere Kommunikationseinheit angeschlossenen zentralen Verteilungsrechner (6) übermittelt wird,
f) sobald eine Anfrage (7) einer Kommunikationseinheit (1, 2) über einen Datenkanal (52) beim Verteilungsrechner (6) einlangt, der Verteilungsrechner (6) aktiviert wird und anschließend jeweils eine Sprachkommunikation über jeweils einen Sprachkanal (51) sowohl vom Verteilungsrechner (6) zur anfragenden Kommunikationseinheit (21) sowie vom Verteilungsrechner zu einer oder zu mehreren durch die jeweilige Anfrage (7) angegebenen oder bestimmbaren Kommunikationseinheiten (1, 2) erstellt und aufrecht erhalten wird, und
g) während des Bestehens der derart aufgebauten Sprachkänale (51) die beim Verteilungsrechner (6) einlangenden Sprachmitteilungen an die übrigen der durch die jeweilige Anfrage (7) angegebenen oder bestimmten Kommunikationseinheiten (1, 2) weitergeleitet werden,
**dadurch gekennzeichnet, dass**
- das Basisnetzwerk (3) ein TETRA- oder LTE-Netzwerk ist oder ein GSM- aber nicht GSM-R-Netzwerk ist, wobei der Aufbau von Datenkanälen (52) über eine Signalisierung mittels Kurzmitteilungen, insbesondere SMS oder SDS, erfolgt, oder- das Basisnetzwerk (3) ein analoges Funknetzwerk ist, wobei zur Übertragung der Daten zwischen dem Basisnetzwerk (3) und den mobilen Endgeräten (2) jeweils ein Modem vorgesehen ist, das zu Übertragende Daten in ein den Sprachdaten überlagertes Analogsignal codiert und in den Sprachdaten vorliegende überlagerte codierte Daten decodiert und diese Daten in digitaler Form zur Verfügung hält.

11. Verfahren nach Anspruch 10, **dadurch gekennzeichnet, dass**
a) eine Kommunikationseinheit (1, 2), insbesondere jedes mobile Endgerät (2), beim Verteilungsrechner (6) angemeldet wird, indem das mobile Endgerät (2) seinen jeweiligen Benutzer zur Eingabe einer Kennung, insbesondere einer Zugnummer, auffordert und diese Kennung gemeinsam mit oder als Teil einer Registrierungsanfrage (72) an den Verteilungsrechner (6) übermittelt,
b) bei Einlangen einer solchen Registrierungsanfrage (72) mit dem Verteilungsrechner (6) die angegebene und übermittelte Kennung der internen Netzwerkkennung, insbesondere Einwahlnummer oder Telefonnummer, des sich anmeldenden mobilen Endgeräts (2) zugeordnet und in einem Registrierungsspeicher (61) abgespeichert wird, und
c) falls eine Anfrage betreffend eine Sprachkommunikation unter Angabe der jeweiligen Kennung durch einen anderen der Kommunikationseinheiten (1, 2) beim Verteilungsrechner (6) einlangt, eine Sprachkommunikation vom Verteilungsrechner (6) zum mobilen Endgerät (2) mit der der Kennung zugeordneten internen Netzwerkkennung aufgebaut wird und jeweils Sprachmitteilungen von dem angemeldeten mobilen Endgerät (2) und der anfragenden anderen Kommunikationseinheit (1, 2) weitergeleitet werden.

12. Verfahren nach einem der Ansprüche 10 oder 11, **dadurch gekennzeichnet, dass**
a) eine Anzahl von Kontrollzentralen (1) vorgesehen sind, die jeweils für die Regelung von bestimmten geographischen Abschnitten (42) zuständig sind, wobei dem Verteilungsrechner (6) eine Zuordnung von geographischen Positionen zu den einzelnen Kontrollzentralen (1) vorgegeben wird, und von diesem in einem Zuordnungsspeicher (62) zur Verfügung gehalten wird,
b) zumindest ein mobiles Endgerät (2) laufend, insbesondere mittels eines eingebauten GPS-Geräts, seine Position ermittelt,
c) mit dem jeweiligen mobile Endgerät (2) eine LDA-Anfrage (71) unter Angabe seiner geographischen Position an den Verteilungsrechner (6) übermittelt wird,
d) bei Einlangen einer LDA-Anfrage (71) beim Verteilungsrechner (6) eine Sprachkommunikation zwischen dem Verteilungsrechner (6) und dem anfragenden mobilen Endgerät (2) sowie zwischen dem Verteilungsrechner (6) und der jeweiligen der angegebenen geographischen Position zugeordneten Kontrollzentrale (1) erstellt wird, und
e) Sprachmitteilungen zwischen dem anfragenden mobilen Endgerät (2) und der ermittelten Kontrollzentrale (1) weitergeleitet werden.

13. Verfahren nach einem der Ansprüche 10 bis 12, **dadurch gekennzeichnet**,
a) im Verteilungsrechner (6) ein Gruppenspeicher (63) für Gesprächsgruppen alloziert wird, wobei jeder Gesprächsgruppe (G1, G2, G3) jeweils eine Gruppenkennung sowie die der jeweiligen Gruppe (G1, G2, G3) zugeordneten Kommunikationseinheiten (1, 2) zugeordnet werden,
b) dass mit einer Kommunikationseinheit (1, 2) bei Aktivierung unter Angabe einer Gruppenkennung durch ihren jeweiligen Benutzer eine Gruppenrufanfrage (74) an den Verteilungsrechner (6) mit der jeweiligen Gruppenkennung (G1, G2, G3) übermittelt wird,
c) dass mit dem Verteilungsrechner (6) bei Vorliegen einer Gruppenrufanfrage (74) mit einer angegebenen Gruppenkennung (G1, G2, G3) eine Sprachkommunikation zu sämtlichen der Gruppe zugehörigen Kommunikationseinheiten (1, 2) aufgebaut werden, und
d) dass mit dem Verteilungsrechner (6) nach Aufbau der Sprachkanäle (51) Sprachmitteilungen zwischen den der jeweiligen Gruppe (G1, G2, G3) zugeordneten Kommunikationseinheiten (1, 2) und gegebenenfalls der anfragenden Kommunikationseinheit (1, 2) weitergeleitet werden,
e) wobei insbesondere ein Sprachkanal (51) nur dann aufgebaut wird, wenn die anfragende Kommunikationseinheit (1, 2) der jeweiligen Gruppe (G1, G2, G3) zugeordnet ist.

14. Verfahren nach einem der Ansprüche 10 bis 13, **dadurch gekennzeichnet, dass**
a) dass im Verteilungsrechner (6) einen Notrufgruppenspeicher (64) alloziert wird, wobei der Notruf-Gruppe (N) jeweils eine Gruppenkennung sowie die der Notruf-Gruppe zugeordneten Kommunikationseinheiten (1, 2) zugeordnet werden,
b) dass mit einer Kommunikationseinheit (1, 2) bei Aktivierung unter Angabe einer Notruf-Kennung durch ihren jeweiligen Benutzer einen Notruf (76) an den Verteilungsrechner (6) übermittelt werden,
c) dass mit dem Verteilungsrechner (6) bei Vorliegen eines Notrufs (76) Sprachkanäle (51) zu sämtlichen der Notruf-Gruppe (N) zugehörigen Kommunikationseinheiten (1, 2) aufgebaut werden,
d) dass mit dem Verteilungsrechner (6) nach Aufbau der Sprachkanäle (51) Sprachmitteilungen zwischen den der Notruf-Gruppe (N) zugeordneten Kommunikationseinheiten (1, 2) und der den Notruf (76) absendenden Kommunikationseinheit (1, 2) weitergeleitet werden, und
e) dass vom Verteilungsrechner (6) vor dem Aufbau der Sprachkanäle (51) mit Kommunikationseinheiten (1, 2) aus der Notrufgruppe (N) bestehende Sprachkanäle (51) zu diesen Kommunikationseinheiten (1, 2) unterbrochen und/oder beendet werden und insbesondere nach dem Abbau der durch den Notruf (76) erstellten Sprachkanäle (51) fortsetzt und/oder erneut hergestellt werden.

15. Verfahren nach einem der Ansprüche 10 bis 14, **dadurch gekennzeichnet, dass** die Kommunikationseinheiten (1, 2) unmittelbar ausschließlich mit dem Verteilungsrechner (6) in Daten- und/oder Sprachkommunikation gebracht werden und/oder dass Sprach- und/oder Datenkanäle (51, 52) ausschließlich zwischen dem Verteilungsrechner (6) und einer Kommunikationseinheit (1, 2) aufgebaut werden.

16. Verfahren nach einem der Ansprüche 10 bis 15, **dadurch gekennzeichnet, dass**
a) dem jeweiligen Benutzer von den Kommunikationseinheiten (1, 2) die Option zum Beenden einer Sprachverbindung geboten wird,
b) dass von den Kommunikationseinheiten (1, 2) bei Anwahl dieser Option durch den Benutzer eine Beendigungsmitteilung (75) über einen Datenkanal (52) an den Verteilungsrechner (6) übermittelt wird, und
c) dass bei Einlangen einer Beendigungsmitteilung (75) beim Verteilungsrechner (6) die Sprachkanäle (51) zwischen der Kommunikationseinheit (1, 2) und dem Verteilungsrechner (6) getrennt werden.

17. Verfahren nach Anspruch 16, **dadurch gekennzeichnet, dass** vom für den Fall, dass eine Weiterleitung von Sprachmitteilungen innerhalb einer Gruppe (G1, G2, G3) oder Notruf-Gruppe (N) von Kommunikationseinheiten (1, 2) besteht und sich nach der Trennung der Sprachverbindung lediglich eine einzige Kommunikationseinheit (1, 2) in der jeweiligen Gesprächsgruppe (G1, G2, G3) oder Notruf-Gruppe (N) befindet oder die jeweilige Gesprächsgruppe (G1, G2, G3) oder Notruf-Gruppe (N) nach Ausscheiden der jeweiligen Kommunikationseinheit (1, 2) eine einen vorgegebenen Schwellenwert unterschreitende Anzahl von Teilnehmern aufweist, die Verbindung zu sämtlichen der Gesprächsgruppe (G1, G2, G3) oder Notruf-Gruppe (N) zugehörigen Kommunikationseinheiten (1, 2) getrennt wird.

18. Verfahren nach einem der vorangehenden Ansprüche, **dadurch gekennzeichnet, dass** Sprachkanäle (51) ausschließlich vom Verteilungsrechner (6) initiiert werden.

19. Datenträger, auf dem ein Programm zur Durchführung eines Verfahrens nach einem der Patentansprüche 10 bis 18 auf einem mobilen Endgerät (1), einer Kommunikationszentrale (2) oder einem Verteilungsrechner (6) abgespeichert ist.

## Claims

1. A network for data communication and for data exchange between communication units (1, 2),
a) comprising a base network (3) and a number of communication units (1, 2) connected to the base network (3), specifically
- at least one control centre (1) and
- at least one mobile terminal (2) disposed and/or arranged in a vehicle (21) mounted on rails (4),
b) wherein the base network (3) is connected to a number of transmitter stations (41) disposed along the rail section (4),
c) via the transmitter stations (41), in particular exclusively, two types of communication channels (51, 52) are available via radio from the base network (3) to the mobile terminals (2) disposed in the vehicles (21), more specifically
- a voice channel (51) for transmitting speech, and
- a data channel (52) for transmitting digital data, and
d) wherein the base network (3), upon the request of a communication unit (1, 2), creates one or more communication channels (51, 52) for data transmission between, in particular exclusively, two communication units (1, 2), wherein
e) a central distribution computer (6) for establishing, terminating and managing one or more communication channels (51, 52) for data and/or voice communication between the distribution computer (6) and the communication units (1, 2) via the base network (3) is connected to the base network (3) as a further communication unit,
f) the distribution computer (6), when a request (7) of a communication unit (1, 2) arrives via a data channel (52), can be activated and creates and maintains a voice communication via a voice channel (51) both for the requesting communication unit (21) and one or more communication units (1, 2) specified or determinable by the particular request (7), and
g) during the existence of the voice channels (51, 51') established in this way, when voice messages arrive at the distribution computer the distribution computer (6) forwards said messages to the other communication units (1, 2) specified or determined by the particular request (7),
**characterised in that**
- the base network (3) is a TETRA or LTE network or a GSM, but not a GSM-R network, wherein data channels (52) are established via a signalling by means of short messages, in particular SMS or SDS, or the base network (3) is an analogue radio network, wherein a modem is provided for the transmission of data between the base network (3) and the mobile terminals (2) and encodes the data to be transmitted into an analogue signal superimposed with the voice data and decodes superimposed encoded data present in the voice data and makes this data available in digital form.

2. The network according to claim 1, **characterised in that**
a) a communication unit (1, 2), in particular any mobile terminal (2), enables login to a distribution computer (6) by the mobile terminal (2) requesting its user to input an identifier, in particular a train number, and transmitting this identifier jointly with, or as part of, a registration request (72) to the distribution computer (6),
b) the distribution computer (6), when a registration request (72) of this kind arrives, assigns the specified and transmitted identifier to the internal network identifier, in particular dial-in number or telephone number, of the mobile terminal (2) logging in and stores this in a registration memory (61), and
c) the distribution computer (6), in the event of a request for voice communication with specification of the particular identifier by another of the communication units (1, 2), establishes a voice channel (51, 51') to the mobile terminal (2) using the internal network identifier assigned to the identifier and forwards voice messages from the logged-in mobile terminal (2) and the requesting other communication unit (1, 2).

3. The network according to any one of the preceding claims, **characterised in that**
a) a number of control centres (1) are provided, which are each responsible for controlling specific geographical portions (42), wherein the distribution computer (6) contains an assignment of geographical positions to the individual control centres (1) and holds it available in an assignment memory (62), at least one mobile terminal (2) comprises a device for detecting its geographical position, in particular a GPS unit,
b) the relevant mobile terminal (2), upon selection by its user, transmits an LDA request (71), with specification of its geographical position, to the distribution computer (6),
c) the distribution computer (6), when an LDA request (71) of this kind arrives, creates a voice channel (51, 51') to the requesting mobile terminal (2) and to the control centre (1) assigned to the specified geographical position, and
d) the distribution computer (6) forwards voice messages between the requesting mobile terminal (2) and the determined control centre (1).
e) the distribution computer (6) forwards voice messages between the requesting mobile terminal (2) and the determined control centre (1).

4. The network according to any one of the preceding claims, **characterised in that**
a) the distribution computer (6) comprises a group memory (63) for conversation groups (G1, G2, G3), wherein each conversation group (G1, G2, G3) is assigned a group identifier and the communication units (1, 2) assigned to the particular conversation group (G1, G2, G3),
b) **in that** a communication unit (1, 2), in the event of activation with specification of a group identifier by its particular user, transmits a group call request (74) to the distribution computer (6) with the particular group identifier (G1, G2, G3),
c) **in that** the distribution computer (6), in the presence of a group call request (74) with a specified group identifier (G1, G2, G3), establishes a voice channel (51, 51', 51", 51"') to all communication units (1, 2) associated with the group (G1, G2, G3), and
d) **in that** the distribution computer (6), once the voice channels (51, 51', 51", 51'") have been established, forwards voice messages between the communication units (1, 2) associated with the particular group (G1, G2, G3) and optionally the requesting communication unit (1, 2),
e) wherein in particular the distribution computer (6) establishes a voice channel (51, 51', 51", 51'") only when the requesting communication unit (1, 2) is assigned to the particular group (G1, G2, G3).

5. The network according to any one of the preceding claims, **characterised in that**
a) the distribution computer (6) comprises an emergency call group memory (64), wherein the emergency call groups are each assigned a group identifier and the communication units (1, 2) assigned to the emergency call group (N),
b) **in that** a communication unit (1, 2), in the event of activation with specification of an emergency call identifier by its particular user, transmits an emergency call (76) to the distribution computer (6),
c) **in that** the distribution computer (6), in the presence of an emergency call (76), establishes a voice communication to all of the communication units (1, 2) associated with the emergency call group (N),
d) **in that** the distribution computer (6), once the voice communication has been established, forwards voice messages between the communication units (1, 2) assigned to the emergency call group (N) and the communication unit (1, 2) sending the emergency call (76), and
e) **in that**, before the voice channels (51'", 51^{IV}, 51^{V}, 51^{VI}) are established with communication units (1, 2) from the emergency call group (N), the distribution computer (6) interrupts and/or terminates existing voice channels (51, 51', 51") to these communication units (1, 2) and, at the end, optionally continues and/or re-establishes the voice channels (51, 51', 51") terminated and/or interrupted by the emergency call (76).

6. The network according to any one of the preceding claims, **characterised in that** the communication units (1, 2) are directly in data and/or voice communication exclusively with the distribution computer (6), and/or **in that** voice and/or data channels (51, 52) are established exclusively between the distribution computer (6) and a communication unit (1, 2).

7. The network according to any one of the preceding claims, **characterised in that**
a) the communication units (1, 2) offer the user the option to terminate a voice connection,
b) **in that** the communication units (1, 2), in the event of selection of this option by the user, transmit a termination message (75) via a data channel (52) to the distribution computer (6), which disconnects the voice connection between the communication unit (1, 2) and the distribution computer (6).

8. The network according to claim 7, **characterised in that**, if voice messages within a group (G) or emergency call group (N) of communication units (1, 2) are forwarded and, after the disconnection of the voice connection, merely a single communication unit (1, 2) is in the particular conversation group or emergency call group (G, N), or the particular conversation group or emergency call group (G, N) has a number of subscribers falling short of a predefined threshold value after the withdrawal of the particular communication unit (1, 2), the distribution computer (6) disconnects the connection to all of the communication units (1, 2) associated with the conversation group or emergency call group (G, N).

9. The network according to any one of the preceding claims, **characterised in that** voice channels (51) are initiated exclusively by the distribution computer (6).

10. A method for data communication and for data exchange between communication units (1, 2),
a) comprising a base network (3) and a number of communication units (1, 2) connected to the base network (3), specifically
- at least one control centre (1) and
- at least one mobile terminal (2) disposed and/or arranged in a vehicle (21) mounted on rails (4),
b) wherein the base network (3) is connected to a number of transmitter stations (41) disposed along the rail section (4),
c) wherein, via the transmitter stations (41), in particular exclusively, two types of communication channels (51, 52) are available via radio from the base network (3) to the mobile terminals (2) disposed in the vehicles (21), more specifically
- a voice channel (51) for transmitting speech, and
- a data channel (52) for transmitting digital data, and
d) wherein the base network (3), upon the request of a communication unit (1, 2), creates one or more communication channels (51, 52) for data transmission between, in particular exclusively, two communication units (1, 2),
e) by means of one of the communication units (1, 2), a query (7) is transmitted via a data channel (52) to a central distribution computer (6) connected to the base network (3) as a further communication unit,
f) as soon as a request (7) of a communication unit (1, 2) arrives via a data channel (52) at the distribution computer (6), the distribution computer (6) is activated and then a voice communication via a voice channel (51) from the distribution computer (6) to the requesting communication unit (21) and also from the distribution computer to one or more communication units (1, 2) specified or determinable by the particular request (7) is created and maintained, and
g) during the existence of the voice channels (51) established in this way exist, the voice messages arriving at the distribution computer (6) are forwarded to the other communication units (1, 2) specified or determined by the particular request (7),
**characterised in that**
- the base network (3) is a TETRA or LTE network or a GSM, but not a GSM-R network, wherein data channels (52) are established via a signalling by means of short messages, in particular SMS or SDS, or the base network (3) is an analogue radio network, wherein a modem is provided for the transmission of data between the base network (3) and the mobile terminals (2) and encodes the data to be transmitted into an analogue signal superimposed with the voice data and decodes superimposed encoded data present in the voice data and makes this data available in digital form.

11. The method according to claim 10, **characterised in that**
a) a communication unit (1, 2), in particular any mobile terminal (2), is logged in to the distribution computer (6) by the mobile terminal (2) requesting its user to input an identifier, in particular a train number, and transmitting this identifier jointly with, or as part of, a registration request (72) to the distribution computer (6),
b) when a registration request (72) of this kind arrives with the distribution computer (6), the specified and transmitted identifier is assigned to the internal network identifier, in particular dial-in number or telephone number, of the mobile terminal (2) logging in and this is stored in a registration memory (61), and
c) if a request relating to a voice communication, with specification of the particular identifier by another of the communication units (1, 2), arrives at the distribution computer (6), a voice communication from the distribution computer (6) to the mobile terminal (2) is established using the internal network identifier assigned to the identifier, and voice messages are forwarded from the logged-in mobile terminal (2) and the requesting other communication unit (1, 2).

12. The method according to either one of claims 10 or 11, **characterised in that**
a) a number of control centres (1) are provided, which are each responsible for controlling specific geographical portions (42), wherein an assignment of geographical positions to the individual control centres (1) is predefined to the distribution computer (6) and is held available thereby in an assignment memory (62),
b) at least one mobile terminal (2) continuously determines its position, in particular by means of an installed GPS unit,
c) by means of the particular mobile terminal (2), an LDA request (71) with specification of the geographical position thereof is transmitted to the distribution computer (6),
d) when an LDA request (71) arrives at the distribution computer (6), a voice communication between the distribution computer (6) and the requesting mobile terminal (2) and between the distribution computer (6) and the particular control centre (1) assigned to the specified geographical position is created, and
e) voice messages are forwarded between the requesting mobile terminal (2) and the determined control centre (1).

13. The method according to any one of claims 10 to 12, **characterised in that**
a) in the distribution computer (6) a group memory (63) for conversation groups is allocated, wherein each conversation group (G1, G2, G3) is assigned a group identifier and the communication units (1, 2) assigned to the particular group (G1, G2, G3),
b) **in that** by means of a communication unit (1, 2), in the event of activation with specification of a group identifier by its particular user, a group call request (74) is transmitted to the distribution computer (6) with the particular group identifier (G1, G2, G3),
c) **in that** by means of the distribution computer (6), in the presence of a group call request (74) with a specified group identifier (G1, G2, G3), a voice communication to all of the communication units (1, 2) associated with the group is established, and
d) **in that** by means of the distribution computer (6), once the voice channels (51) have been established, voice messages are forwarded between the communication units (1, 2) assigned to the particular group (G1, G2, G3) and optionally the requesting communication unit (1, 2),
e) wherein in particular a voice channel (51) is established only when the requesting communication unit (1, 2) is assigned to the particular group (G1, G2, G3).

14. The method according to any one of claims 10 to 13, **characterised in that**
a) in the distribution computer (6) an emergency call group memory (64) is allocated, wherein the emergency call groups (N) are each assigned a group identifier and the communication units (1, 2) assigned to the emergency call group,
b) **in that** by means of a communication unit (1, 2), in the event of activation with specification of an emergency call identifier by its particular user, an emergency call (76) is transmitted to the distribution computer (6),
c) **in that** by means of the distribution computer (6), in the presence of an emergency call (76), voice channels (51) are established to all of the communication units (1, 2) associated with the emergency call group (N),
d) **in that** by means of the distribution computer (6), once the voice channels (51) have been established, voice messages are forwarded between the communication units (1, 2) assigned to the emergency call group (N) and the communication unit (1, 2) sending the emergency call (76), and
e) **in that**, before the voice channels (51) with communication units (1, 2) from the emergency call group (N) are established, existing voice channels (51) to these communication units (1, 2) are interrupted and/or terminated by the distribution computer (6) and are continued and/or re-established, in particular after the destruction of the voice channels (51) created by the emergency call (76).

15. The method according to any one of claims 10 to 14, **characterised in that** the communication units (1, 2) are directly in data and/or voice communication exclusively with the distribution computer (6), and/or **in that** voice and/or data channels (51, 52) are established exclusively between the distribution computer (6) and a communication unit (1, 2).

16. The method according to any one of claims 10 to 15, **characterised in that**
a) the option to end a voice connection is offered to the user of the communication units (1, 2),
b) **in that**, when this option is selected by the user, a termination message (75) is transmitted from the communication units (1, 2) via a data channel (52) to the distribution computer (6), and
c) **in that**, when a termination message (75) arrives at the distribution computer (6), the voice channels (51) between the communication unit (1, 2) and the distribution computer (6) are disconnected.

17. The method according to claim 16, **characterised in that**, if voice messages within a group (G1, G2, G3) or emergency call group (N) of communication units (1, 2) are forwarded and, after the disconnection of the voice connection, merely a single communication unit (1, 2) is in the particular conversation group (G1, G2, G3) or emergency call group (N), or the particular conversation group (G1, G2, G3) or emergency call group (N) has a number of subscribers falling short of a predefined threshold value after the withdrawal of the particular communication unit (1, 2), the connection to all of the communication units (1, 2) associated with the conversation group (G1, G2, G3) or emergency call group (N) is disconnected.

18. The method according to any one of the preceding claims, **characterised in that** voice channels (51) are initiated exclusively by the distribution computer (6).

19. A data carrier, on which a program for carrying out a method according to any one of claims 10 to 18 on a mobile terminal (1), a communication centre (2) or a distribution computer (6) is stored.

## Revendications

1. Réseau pour la communication de données et pour l'échange de données entre unités de communication (1, 2),
a) comprenant un réseau de base (3) ainsi qu'une pluralité d'unités de communication (1, 2) raccordées au réseau de base (3), à savoir
- au moins une centrale de commande (1) et
- au moins un terminal mobile (2) agencé et/ou se trouvant dans un véhicule (21) relié à des rails (4),
b) dans lequel le réseau de base (3) est raccordé à une pluralité de stations émettrices (41) se trouvant le long du tronçon de rails (4),
c) en particulier deux types de canaux de communication (51, 52) exclusivement étant disponibles par radio du réseau de base (3) aux terminaux mobiles (2) se trouvant dans les véhicules (21), par le biais des stations émettrices (41), à savoir
- un canal vocal (51) pour la transmission de la voix et
- un canal de données (52) pour la transmission de données numériques et
d) dans lequel le réseau de base (3) établit respectivement sur demande d'une unité de communication (1, 2) un ou plusieurs canaux de communication (51, 52) pour la transmission de données entre, en particulier deux unités de communication (1, 2) exclusivement, dans lequel
e) en guise d'autre unité de communication, un calculateur de répartition (6) est connecté au réseau de base (3), pour la création, pour l'interruption et pour la gestion d'un ou de plusieurs canaux de communication (51, 52) pour la communication vocale et/ou de données par le biais du réseau de base (3) entre le calculateur de répartition (6) et les unités de communication (1, 2),
f) le calculateur de répartition (6) peut être activé lors de l'arrivée d'une demande (7) d'une unité de communication (1, 2) par le biais d'un canal de données (52) et établit et maintient une communication vocale par le biais respectivement d'un canal vocal (51) aussi bien vers l'unité de communication (21) demandeuse que vers une ou plusieurs unités de communication (1, 2) spécifiées ou identifiables par la demande (7) respective et
g) le calculateur de répartition (6) transmet, pendant l'existence des canaux vocaux (51, 51') ainsi créés, des messages vocaux qui lui parviennent aux unités de communication (1, 2) par ailleurs spécifiées ou identifiées par la demande (7) respective,
**caractérisé en ce que**
- le réseau de base (3) est un réseau TETRA ou LTE ou bien un réseau GSM mais pas GSM-R, dans lequel la création de canaux de données (52) s'effectue par le biais d'une signalisation au moyen de messages courts, notamment SMS ou SDS, le réseau de base (3) est un réseau sans fil analogique, dans lequel, pour la transmission des données entre le réseau de base (3) et les terminaux mobiles (2), un modem est respectivement prévu, qui code les données à transmettre en un signal analogique superposé sur les données vocales et décode les données codées superposées présentes dans les données vocales et met à disposition ces données sous forme numérique.

2. Réseau selon la revendication 1, **caractérisé en ce que**
a) une unité de communication (1, 2), en particulier chaque terminal mobile (2), permet la notification auprès du calculateur de répartition (6), **en ce que** le terminal mobile (2) demande à son utilisateur respectif la saisie d'un identifiant, en particulier d'un numéro de train et communique cet identifiant conjointement avec ou sous forme de partie d'une demande d'enregistrement (72), au calculateur de répartition (6),
b) le calculateur de répartition (6), lors de l'arrivée d'une telle demande d'enregistrement (72), associe l'identifiant fourni et communiqué à l'identifiant de réseau interne, en particulier le numéro d'accès ou numéro de téléphone, du terminal mobile (2) qui se présente et le stocke dans une mémoire d'enregistrement (61) et
c) le calculateur de répartition (6), lors de la demande d'une communication vocale en indiquant l'identifiant respectif par une autre des unités de communication (1, 2) crée un canal vocal (51, 51') vers le terminal mobile (2) avec l'identifiant réseau interne attribué à l'identifiant et transmet respectivement les messages vocaux provenant du terminal mobile (2) identifié et de l'autre
unité de communication (1, 2) demandeuse.

3. Réseau selon l'une quelconque des revendications précédentes, **caractérisé en ce que**
a) une pluralité de centrales de commande (1) sont prévues, qui sont responsables respectivement de la régulation de secteurs géographiques (42) définis, le calculateur de répartition (6) contenant une attribution de positions géographiques aux centrales de commande (1) individuelles et les tenant à disposition dans une mémoire d'attribution (62),
b) au moins un terminal mobile (2) présente un dispositif de détection de sa position géographique, en particulier un appareil GPS,
c) le terminal mobile (2) respectif sur sélection de son utilisateur transmet une demande LDA (71) en indiquant sa position géographique au calculateur de répartition (6),
d) le calculateur de répartition (6) lors de l'arrivée d'une telle demande LDA (71), établit un canal vocal (51, 51') vers le terminal mobile (2) demandeur ainsi que vers la centrale de commande (1) respective attribuée à la position géographique indiquée et
e) le calculateur de répartition (6) transmet les messages vocaux entre le terminal mobile (2) demandeur et la centrale de commande (1) déterminée.

4. Réseau selon l'une quelconque des revendications précédentes, **caractérisé en ce que**
a) le calculateur de répartition (6) présente une mémoire de groupe (63) pour des groupes de parole (G1, G2, G3), un identifiant de groupe étant attribué respectivement à chaque groupe de parole (G1, G2, G3) ainsi que les unités de communication (1, 2) attribuées au groupe de parole (G1, G2, G3) respectif,
b) une unité de communication (1, 2) lors de l'activation par l'indication d'un identifiant de groupe par son utilisateur respectif, transmet une demande d'appel de groupe (74) au calculateur de répartition (6) avec l'identifiant de groupe (G1, G2, G3) respectif,
c) le calculateur de répartition (6), en présence d'une demande d'appel de groupe (74) avec un identifiant de groupe (G1, G2, G3) indiqué, crée respectivement un canal vocal (51, 51', 51", 51'") pour l'ensemble des unités de communication (1, 2) appartenant au groupe (G1, G2, G3) et
d) le calculateur de répartition (6), après la création des canaux vocaux (51, 51', 51", 51'"), transfère les messages vocaux entre les unités de communication (1, 2) appartenant au groupe (G1, G2, G3) respectif et, le cas échéant, l'unité de communication (1, 2) demandeuse,
e) dans lequel, en particulier, le calculateur de répartition (6) ne crée un canal vocal (51, 51', 51", 51'") que lorsque l'unité de communication (1, 2) demandeuse est attribuée au groupe (G1, G2, G3) respectif.

5. Réseau selon l'une quelconque des revendications précédentes, **caractérisé en ce que**
a) le calculateur de répartition (6) présente une mémoire de groupe d'appel d'urgence (64), un identifiant de groupe ainsi que les unités de communication (1, 2) attribuées au groupe d'appel d'urgence (N) étant attribués respectivement au groupe d'appel d'urgence,
b) une unité de communication (1, 2) lors de l'activation par l'indication d'un identifiant d'appel d'urgence par son utilisateur respectif, transmet un appel d'urgence (76) au calculateur de répartition (6),
c) le calculateur de répartition (6), en présence d'un appel d'urgence (76), établit une communication vocale vers l'ensemble des unités de communication (1, 2) appartenant au groupe d'appel d'urgence (N),
d) le calculateur de répartition (6), après établissement de la communication vocale, transfère les messages vocaux entre les unités de communication (1, 2) attribuées au groupe d'appel d'urgence (N) et l'unité de communication (1, 2) envoyant l'appel d'urgence (76) et
e) le calculateur de répartition (6), avant la création des canaux vocaux (51'", 51^{IV}, 51^{V}, 51^{VI}) avec les unités de communication (1, 2) du groupe d'appel d'urgence (N), interrompt et/ou met fin aux canaux vocaux existants (51, 51', 51") vers ces unités de communication (1, 2) et, le cas échéant, après la fin des canaux vocaux (51, 51', 51") interrompus et/ou terminés par l'appel d'urgence (76), les poursuit ou les crée de nouveau.

6. Réseau selon l'une quelconque des revendications précédentes, **caractérisé en ce que** les unités de communication (1, 2) sont directement en communication de données et/ou vocale exclusivement avec le calculateur de répartition (6) et/ou **en ce que** les canaux vocaux et/ou de données (51, 52) sont créés exclusivement entre le calculateur de répartition (6) et une unité de communication (1, 2).

7. Réseau selon l'une quelconque des revendications précédentes, **caractérisé en ce que**
a) les unités de communication (1, 2) proposent à l'utilisateur respectif l'option de mettre fin à une liaison vocale,
b) les unités de communication (1, 2), lors de la sélection de cette option par l'utilisateur, transmettent un message d'interruption (75), par le biais d'un canal de données (52), au calculateur de répartition (6), qui rompt la liaison vocale entre l'unité de communication (1, 2) et le calculateur de répartition (6).

8. Réseau selon la revendication 7, **caractérisé en ce que** le calculateur de répartition (6), au cas où une transmission de messages vocaux s'effectuerait au sein d'un groupe (G) ou d'un groupe d'appel d'urgence (N) d'unités de communication (1, 2) et où, après la rupture de la liaison vocale, seule une unité de communication (1, 2) individuelle se trouverait dans le groupe de parole ou groupe d'appel d'urgence (G, N) respectif ou bien où le groupe de parole ou groupe d'appel d'urgence (G, N) respectif présenterait, après l'abandon de l'unité de communication (1, 2) respective, un nombre de participants inférieur à une valeur seuil prédéfinie, rompt la liaison vers l'ensemble des unités de communication (1, 2) appartenant au groupe de parole ou au groupe d'appel d'urgence (G, N).

9. Réseau selon l'une quelconque des revendications précédentes, **caractérisé en ce que** les canaux vocaux (51) sont initiés exclusivement par le calculateur de répartition (6).

10. Procédé pour la communication de données et pour l'échange de données entre unités de communication (1, 2),
a) comprenant un réseau de base (3) ainsi qu'une pluralité d'unités de communication (1, 2) raccordées au réseau de base (3), à savoir
- au moins une centrale de commande (1) et
- au moins un terminal mobile (2) agencé et/ou se trouvant dans un véhicule (21) relié à des rails (4),
b) dans lequel le réseau de base (3) est raccordé à une pluralité de stations émettrices (41) se trouvant le long du tronçon de rails (4),
c) en particulier deux types de canaux de communication (51, 52) exclusivement étant disponibles par radio du réseau de base (3) aux terminaux mobiles (2) se trouvant dans les véhicules (21), par le biais des stations émettrices (41), à savoir
- un canal vocal (51) pour la transmission de la voix et
- un canal de données (52) pour la transmission de données numériques et
d) dans lequel le réseau de base (3) établit respectivement sur demande d'une unité de communication (1, 2) un ou plusieurs canaux de communication (51, 52) pour la transmission de données entre, en particulier deux unités de communication (1, 2) exclusivement,
e) une demande (7) est transmise avec une des unités de communication (1, 2), par le biais d'un canal de données (52), à un calculateur de répartition (6) central raccordé au réseau de base (3) sous forme d'unité de communication supplémentaire,
f) dès qu'une demande (7) d'une unité de communication (1, 2) arrive par le biais d'un canal de données (52) au calculateur de répartition (6), le calculateur de répartition (6) est activé et, par la suite, établit et maintient respectivement une communication vocale par le biais respectivement d'un canal vocal (51) aussi bien du calculateur de répartition (6) vers l'unité de communication (21) demandeuse que du calculateur de répartition vers une ou plusieurs autres unités de communication (1, 2) indiquées ou identifiables par la demande (7) respective et
g) pendant l'existence des canaux vocaux (51) ainsi créés, les messages vocaux qui arrivent au calculateur de répartition (6) sont transférés aux unités de communication (1, 2) par ailleurs spécifiées ou identifiées par la demande (7) respective,
**caractérisé en ce que**
- le réseau de base (3) est un réseau TETRA ou LTE ou bien un réseau GSM mais pas GSM-R, dans lequel la création de canaux de données (52) s'effectue par le biais d'une signalisation au moyen de messages courts, notamment SMS ou SDS, ou **en ce que** le réseau de base (3) est un réseau sans fil analogique, dans lequel, pour la transmission des données entre le réseau de base (3) et les terminaux mobiles (2), un modem est respectivement prévu, qui code les données à transmettre en un signal analogique superposé sur les données vocales et décode les données codées superposées présentes dans les données vocales et met à disposition ces données sous forme numérique.

11. Procédé selon la revendication 10, **caractérisé en ce que**
a) une unité de communication (1, 2), en particulier chaque terminal mobile (2), est identifié auprès du calculateur de répartition (6), le terminal mobile (2) demande à son utilisateur respectif la saisie d'un identifiant, en particulier un numéro de train et communique cet identifiant conjointement avec ou sous forme de partie d'une demande d'enregistrement (72), au calculateur de répartition (6),
b) lors de l'arrivée d'une telle demande d'enregistrement (72) auprès du calculateur de répartition (6), l'identifiant fourni et communiqué est attribué à l'identifiant de réseau interne, en particulier le numéro d'accès ou numéro de téléphone, du terminal mobile (2) qui se présente et est stocké dans une mémoire d'enregistrement (61) et
c) au cas où une demande concernant une communication vocale, en indiquant l'identifiant respectif par une autre des unités de communication (1, 2), parviendrait au calculateur de répartition (6), une communication vocale du calculateur de répartition (6) vers le terminal mobile (2) est établie avec l'identifiant réseau interne attribué à l'identifiant et les messages vocaux provenant du terminal mobile (2) identifié et de l'autre unité de communication (1, 2) demandeuse sont respectivement transmis.

12. Procédé selon l'une quelconque des revendications 10 ou 11, **caractérisée en ce que**
a) un certain nombre de centrales de commande (1) sont prévues, qui sont responsables respectivement de la régulation de secteurs géographiques (42) définis, une attribution de positions géographiques vers les centrales de commande (1) individuelles étant indiquée au calculateur de répartition (6) et tenue à disposition par celui-ci dans une mémoire d'attribution (62),
b) au moins un terminal mobile (2) détermine en continu sa position, en particulier au moyen d'un appareil GPS intégré,
c) une demande LDA (71) est transmise en indiquant sa position géographique avec le terminal mobile (2) respectif au calculateur de répartition (6),
d) lors de l'arrivée d'une demande LDA (71) dans le calculateur de répartition (6), une communication vocale est établie entre le calculateur de répartition (6) et le terminal mobile (2) demandeur, ainsi qu'entre le calculateur de répartition (6) et la centrale de commande (1) respective attribuée à la position géographique indiquée et
e) les messages vocaux entre le terminal mobile (2) demandeur et la centrale de commande (1) déterminée sont transférés.

13. Procédé selon l'une quelconque des revendications 10 à 12, **caractérisé en ce que**
a) une mémoire de groupe (63) pour des groupes de parole est allouée dans le calculateur de répartition (6), respectivement un identifiant de groupe étant attribué à chaque groupe de parole (G1, G2, G3) ainsi que les unités de communication (1, 2) attribuées au groupe de parole respectif (G1, G2, G3),
b) une unité de communication (1, 2) lors de l'activation par l'indication d'un identifiant de groupe par son utilisateur respectif, transmet une demande d'appel de groupe (74) au calculateur de répartition (6) avec l'identifiant de groupe (G1, G2, G3) respectif,
c) le calculateur de répartition (6), en présence d'une demande d'appel de groupe (74) avec un identifiant de groupe (G1, G2, G3) indiqué, établit respectivement une communication vocale vers l'ensemble des unités de communication (1, 2) appartenant au groupe et
d) le calculateur de répartition (6), après la création des canaux vocaux (51), transfère les messages vocaux entre les unités de communication (1, 2) appartenant au groupe (G1, G2, G3) respectif et, le cas échéant, l'unité de communication (1, 2) demandeuse,
e) dans lequel, en particulier, un canal vocal (51) n'est créé que lorsque l'unité de communication (1, 2) demandeuse est attribuée au groupe (G1, G2, G3) respectif.

14. Procédé selon l'une quelconque des revendications 10 à 13, **caractérisée en ce que**
a) une mémoire de groupe d'appel d'urgence (64) est allouée dans le calculateur de répartition (6), respectivement un identifiant de groupe ainsi que les unités de communication (1, 2) attribuées au groupe d'appel d'urgence étant attribués au groupe d'appel d'urgence (N),
b) une unité de communication (1, 2) lors de l'activation par l'indication d'un identifiant d'appel d'urgence par son utilisateur respectif, transmet un appel d'urgence (76) au calculateur de répartition (6),
c) le calculateur de répartition (6), en présence d'un appel d'urgence (76) crée des canaux vocaux (51) vers l'ensemble des unités de communication (1, 2) appartenant au groupe d'appel d'urgence (N),
d) le calculateur de répartition (6), après la création des canaux vocaux (51), transfère les messages vocaux entre les unités de communication (1, 2) attribuées au groupe d'appel d'urgence (N) et l'unité de communication (1, 2) envoyant l'appel d'urgence (76) et
e) le calculateur de répartition (6), avant la création des canaux vocaux (51) avec les unités de communication (1, 2) du groupe d'appel d'urgence (N), interrompt et/ou met fin aux canaux vocaux existants (51) vers ces unités de communication (1, 2) et notamment après la fin des canaux vocaux (51) établis par l'appel d'urgence (76), les poursuit et/ou les crée de nouveau.

15. Procédé selon l'une quelconque des revendications 10 à 14, **caractérisé en ce que** les unités de communication (1, 2) sont directement en communication de données et/ou vocale exclusivement avec le calculateur de répartition (6) et/ou **en ce que** les canaux vocaux et/ou de données (51, 52) sont créés exclusivement entre le calculateur de répartition (6) et une unité de communication (1, 2).

16. Procédé selon l'une quelconque des revendications 10 à 15, **caractérisée en ce que**
a) l'option de mettre fin à une liaison vocale est proposée à l'utilisateur respectif par les unités de communication (1, 2),
b) lors de la sélection de cette option par l'utilisateur, un message d'interruption (75) est transmis par le biais d'un canal de données (52) au calculateur de répartition (6) par les unités de communication (1, 2) et
c) lors de l'arrivée d'un message d'interruption (75) au calculateur de répartition (6), les canaux vocaux (51) entre l'unité de communication (1, 2) et le calculateur de répartition (6) sont interrompus.

17. Procédé selon la revendication 16, **caractérisé en ce que**, au cas où une transmission de messages vocaux s'effectuerait au sein d'un groupe (G1, G2, G3) ou d'un groupe d'appel d'urgence (N) d'unités de communication (1, 2) et où, après la rupture de la liaison vocale, seule une unité de communication (1, 2) individuelle se trouverait dans le groupe de parole (G1, G2, G3) respectif ou groupe d'appel d'urgence (N) ou bien où le groupe de parole (G1, G2, G3) respectif ou groupe d'appel d'urgence (N) présenterait, après l'abandon de l'unité de communication (1, 2) respective, un nombre inférieur à une valeur seuil prédéfinie de participants, la liaison vers l'ensemble des unités de communication (1, 2) appartenant au groupe de parole (G1, G2, G3) ou au groupe d'appel d'urgence (N) est rompue.

18. Procédé selon l'une quelconque des revendications précédentes, **caractérisé en ce que** les canaux vocaux (51) sont initiés exclusivement par le calculateur de répartition (6).

19. Support de données sur lequel est mémorisé un programme permettant la réalisation d'un procédé selon l'une quelconque des revendications 10 à 18 sur un terminal mobile (1), une centrale de communication (2) ou un calculateur de répartition (6).
